# EUROPEAN PATENT APPLICATION

(11) **EP 3 306 484 A1**
(43) Date of publication of application: **11.04.2018**
(21) Application number: 16799834.3
(22) Date of filing: 13.05.2016
(51) Int. Cl.: G06F 17/27

(54) **INFORMATION PROCESSING DEVICE, INFORMATION PROCESSING METHOD, AND PROGRAM**

(30) Priority: 28.05.2015 JP 2015108997
(71) Applicant: Sony Corporation, Tokyo 108-0075 (JP)
(72) Inventor: MAEDA Yoshinori, Tokyo 108-0075 (JP)
(74) Representative: MFG Patentanwälte Meyer-Wildhagen Meggle-Freund Gerhard PartG mbB
(86) International application number: PCT/JP2016/064210
(87) International publication number: WO 2016/190126

(57) **Abstract**

The present technology relates to an information processing apparatus, an information processing method, and a program that are capable of interpreting the content of utterance of a user in accordance with the intention of the user and performing processing. An information processing apparatus according to the present technology specifies an assumed time and date, a user assuming the assumed time and date; extracts time and date expression included in an input sentence, the input sentence being input by the user; and obtains a time and date represented by the extracted time and date expression on the basis of the assumed time and date. Processing is performed by various applications on the basis of the obtained time and date. The present technology is applicable to a computer capable of recognizing the content of utterance of a user and performing various kinds of processing.

## Description

### Technical Field

The present technology relates to an information processing apparatus, an information processing method, and a program, and particularly to an information processing apparatus, an information processing method, and a program that are capable of interpreting the content of utterance of a user in accordance with the intention of the user and performing processing.

### Background Art

In recent years, applications that analyze the content of utterance of a user and perform various kinds of processing depending on the content are installed in many portable terminals such as smartphones.

For example, by uttering "tomorrow's schedule" with a scheduler activated, it is also possible to operate the scheduler and display the tomorrow's schedule. For example, assuming that today is December 31, 2014, in a program that supplies the analysis result of the content of utterance to the scheduler, the time and date expression "tomorrow" included in the utterance is converted into the expression of the time and date of the year, month, and day such as January 1, 2015.

As described above, in the program that analyzes the content of utterance, calculation is performed on the basis of the input time and date expression, and conversion processing for acquiring other time and date expression is performed. For example, in the case where "tomorrow" and "following day" are input as the time and date expression, conversion thereof is processing of "advance the date one day". The reference time and date of the processing of "advance the date one day" is December 31, 2014, which is the present time and date.

### Citation List

### Patent Literature

Patent Literature 1: Japanese Patent Application Laid-open No. 2005-301780

### Disclosure of Invention

### Technical Problem

The reference time and date of conversion of the time and date expression such as "today" and "tomorrow" is basically the present time and date. However, in the case where the user uses a calendar application, it becomes possible to perform processing according to the intention of the user by using the date to which the user is paying attention on the calendar as a reference in some cases.

For example, assumption is made that the present date is December 31, 2014. In the case where the user utters "following day" when paying attention to January 10, 2015 of the New Year, it is favorable to display information relating to January 11, 2015 by performing processing of "advance the date one day" on the basis of January 10, 2015, rather than displaying information relating to January 1, 2015 by performing processing of "advance the date one day" on the basis of December 31, 2014. The information relating to January 1, 2015 is deviated from the information relating to the date assumed by the user.

The present technology has been made in view of the above circumstances to make it possible to interpret the content of utterance of a user in accordance with the intention of the user and perform processing.

### Solution to Problem

An information processing apparatus according to an aspect of the present technology includes a time and date management unit that specifies an assumed time and date, a user assuming the assumed time and date; an extraction unit that extracts time and date expression included in an input sentence, the input sentence being input by the user; and an arithmetic unit that obtains a time and date represented by the extracted time and date expression on the basis of the assumed time and date.

The information processing apparatus may further includes a determination unit that determines, depending on the extracted time and date expression, any of the assumed time and date and the present time and date as a time and date used as a reference for obtaining the time and date represented by the time and date expression. In this case, the arithmetic unit may obtain the time and date represented by the extracted time and date expression on the basis of the time and date determined by the determination unit.

The time and date management unit may manage the time and date obtained by the arithmetic unit as a new assumed time and date, and the arithmetic unit may obtain, on the basis of the new assumed time and date, a time and date represented by the time and date expression extracted from the input sentence input after managing the new assumed time and date.

The information processing apparatus may further include:
an output unit that outputs time and date information in a predetermined format, the time and date information representing the time and date obtained by the arithmetic unit; and a processing unit that performs processing on the basis of the time and date information output from the output unit.

The information processing apparatus may further include a storage unit that stores a plurality of kinds of pieces of time and date expression. In this case, the extraction unit may extract the time and date expression stored in the storage unit from the input sentence.

The information processing apparatus may further include a registration unit that causes the storage unit to additionally store the time and date expression input by the user.

The information processing apparatus may further include a storage unit that stores a rule of how to obtain a time and date represented by the time and date expression in relation to the time and date expression. In this case, the arithmetic unit may obtain the time and date represented by the time and date expression in accordance with the rule stored in the storage unit in relation to the extracted time and date expression.

The information processing apparatus may further include a registration unit that causes the storage unit to additionally store the rule input by the user.

The information processing apparatus may further include: a classification unit that classifies content of the input sentence; and a determination unit that determines, depending on a result of classifying the content of the input sentence, whether calculation of the time and date represented by the extracted time and date expression is performed so as to obtain a time and date of the past or a time and date of the future. In this case, the arithmetic unit may perform the calculation of the time and date represented by the extracted time and date expression in accordance with the determination by the determination unit.

The input sentence may be a character string obtained by recognizing utterance of the user, or a character string input by a user's operation.

The time and date management unit may specify the assumed time and date on the basis of an analysis result of the input sentence or a user's operation.

In an aspect of the present technology, an assumed time and date is specified, a user assuming the assumed time and date; time and date expression included in an input sentence is extracted, the input sentence being input by the user; and a time and date represented by the extracted time and date expression is obtained on the basis of the assumed time and date.

### Advantageous Effects of Invention

In accordance with the present technology, it is possible to interpret the content of utterance of a user in accordance with the intention of the user and perform processing.

It should be noted that the effect described here is not necessarily limitative and may be any effect described in the present disclosure.

### Brief Description of Drawings

[Fig. 1] Fig. 1 is a diagram showing an information processing terminal according to an embodiment of the present technology.
[Fig. 2] Fig. 2 is a diagram showing a relationship between applications installed in the information processing terminal.
[Fig. 3] Fig. 3 is a diagram showing an example of time and date expression.
[Fig. 4] Fig. 4 is a diagram showing an example of a time and date basic function.
[Fig. 5] Fig. 5 is a diagram showing an example of a conversion rule.
[Fig. 6] Fig. 6 is a diagram showing an example of a reference expression list.
[Fig. 7] Fig. 7 is a diagram showing an example of classification of content of utterance.
[Fig. 8] Fig. 8 is a diagram showing an example of a processing direction list.
[Fig. 9] Fig. 9 is a block diagram showing a hardware configuration example of the information processing terminal.
[Fig. 10] Fig. 10 is a block diagram showing a functional configuration example of the information processing terminal.
[Fig. 11] Fig. 11 is a block diagram showing a configuration example of a conversion processing unit shown in Fig. 10.
[Fig. 12] Fig. 12 is a flowchart describing time and date expression conversion processing of the information processing terminal.
[Fig. 13] Fig. 13 is a flowchart describing time and date expression conversion processing of the information processing terminal following Fig. 12.
[Fig. 14] Fig. 14 is a diagram describing a series of processing for operating a scheduler by speech.
[Fig. 15] Fig. 15 is a diagram describing a series of processing for operating a scheduler by speech following Fig. 14.
[Fig. 16] Fig. 16 is a diagram describing a series of processing for operating a scheduler by speech following Fig. 15.
[Fig. 17] Fig. 17 is a diagram describing a series of processing for operating a scheduler by speech following Fig. 16.
[Fig. 18] Fig. 18 is a diagram showing a configuration example of a speech semantic analyzer.
[Fig. 19] Fig. 19 is a block diagram showing a configuration example of a phrase extraction unit shown in Fig. 18.
[Fig. 20] Fig. 20 is a diagram showing a basic configuration of WFST.
[Fig. 21] Fig. 21 is a diagram showing an output symbol sequence, a transition weight, and a state transition corresponding to an input symbol sequence.
[Fig. 22] Fig. 22 is a diagram showing a template set expressed by WFST.
[Fig. 23] Fig. 23 is a diagram showing an example of a sentence template WFST.
[Fig. 24] Fig. 24 is an enlarged view of the vicinity of an arc A24 shown in Fig. 23.
[Fig. 25] Fig. 25 is a diagram showing another example of the sentence template WFST.
[Fig. 26] Fig. 26 is a diagram showing still another example of the sentence template WFST.
[Fig. 27] Fig. 27 is a diagram showing an example of a finite value slot WFST.
[Fig. 28] Fig. 28 is a diagram showing another example of the finite value slot WFST.

### Mode(s) for Carrying Out the Invention

Hereinafter, embodiments for carrying out the present technology will be described. Descriptions will be made in the following order.
1. First Embodiment (example of time and date expression conversion system)
2.Second Embodiment (example of semantic analyzer)

### <<First Embodiment>>

### <1. Example of Information Processing Terminal Realizing Time and Date Expression Conversion System>

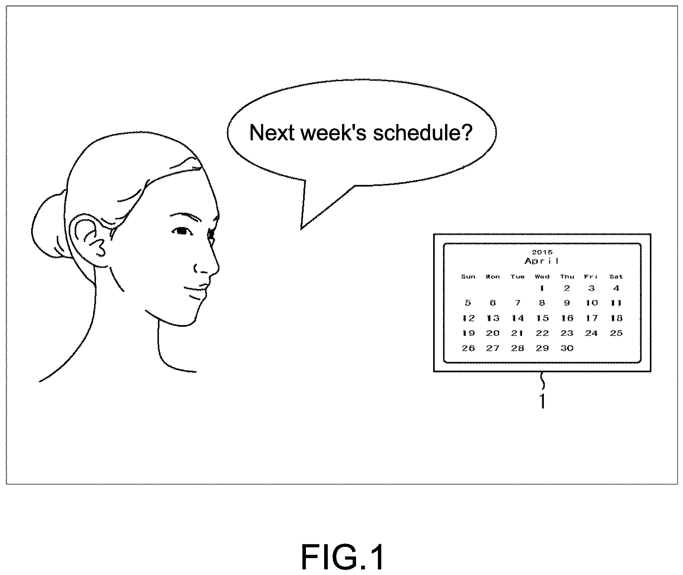

Fig. 1 a diagram showing an information processing terminal according to an embodiment of the present technology.

An information processing terminal 1 is a tablet-type apparatus. A display such as an LCD (Liquid Crystal Display) is provided to the casing of the information processing terminal 1. Various kinds of information such as a schedule, imaged photographs, news in which texts, images, and the like are laid out, and video of recorded programs are displayed on the display depending on the application being executed.

Various applications such as a scheduler, an album application, a news application, a video management application, and a healthcare application are installed in the information processing terminal 1.

The scheduler is an application that manages the user's schedule. The album application is an application for managing the imaged photographs. The news application is an application for displaying news acquired from a server or the like. The video management application is an application for managing recording and reproduction of programs. The healthcare application is an application for managing user's biological information such as a blood pressure and a heart rate and the amount of the user's activity detected by a sensor worn by the user.

A touch panel is provided to the display. Further, a camera or a microphone is provided at a predetermined position of the casing of the information processing terminal 1 such as the edge of the display. The information processing terminal 1 has a function of recognizing the content of utterance of the user collected by the microphone. The information processing terminal 1 performs various kinds of processing depending on the content of utterance of the user. The user is capable of performing operation not only by directly touching the display with a finger or the like but also by speech.

For example, in the case where the scheduler is activated, a calendar of a certain month is displayed on the display of the information processing terminal 1 as shown in Fig. 1. In the case where the user utters "next week's schedule?" as shown in the balloon in this state, "next week" as time and date expression is recognized, and the schedule of "next week" registered by the user is displayed.

At this time, the reference time and date of "next week" is not necessarily the present time and date but the time and date assumed by the user. For example, in the case where the user selects a certain date on the calendar, the date becomes the reference of "next week". That is, the schedule of the following week of the week including the date selected by the user is displayed instead of the schedule of the following week of the week including the present time and date. Note that in the case where the user selects the present time and date, the schedule of the following week of the week including the present time and date is displayed.

As described above, the information processing terminal 1 is provided with a function of recognizing time and date expression included in utterance of the user in accordance with the intention of the user. Accordingly, the information processing terminal 1 is capable of performing various kinds of processing in accordance with the intention of the user.

The time and date expression includes expression representing time, expression representing a date, expression representing the day of the week, expression representing a week, expression representing a month, expression representing a year, expression representing a season, expression representing a period, expression representing a second, expression representing a minute, expression representing an hour, and the like.

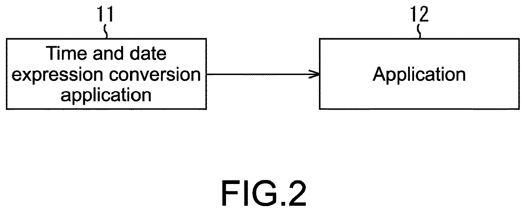

Fig. 2 is a diagram showing a relationship between applications installed in the information processing terminal 1.

As shown in Fig. 2, the information processing terminal 1 is provided with a time and date expression conversion application 11 and an application 12. A character string input by the user is supplied to the time and date expression conversion application 11.

Although not shown, the information processing terminal 1 is provided also with a speech recognition application for recognizing the user's speech collected by the microphone. By executing the speech recognition application, a speech recognition unit is realized by the information processing terminal 1. A character string representing the content of utterance of the user recognized by the speech recognition application is supplied to the time and date expression conversion application 11. A character string input by the user by operating a keyboard or the like may be supplied to the time and date expression conversion application 11.

The time and date expression conversion application 11 extracts the time and date expression included in utterance of a user and converts it so as to represent the time and date assumed by the user. The time and date expression conversion application 11 outputs time and date information acquired by the conversion to the application 12.

The application 12 is the above-mentioned various applications such as a scheduler, an album application, a news application, a video management application, and a healthcare application. The application 12 performs processing on the basis the time and date information supplied from the time and date expression conversion application 11.

By executing the time and date expression conversion application 11 as described above, a time and date expression conversion system is realized in the information processing terminal 1. It is also possible to realize a time and date expression conversion system on not only a tablet-type apparatus but also another apparatus such as a PC, a smartphone, an eyeglass-type information terminal, and a household appliance.

### <2. Regarding Function of Information Processing Terminal 1>

Now, the function of the information processing terminal 1 realized by the time and date expression conversion application 11 will be described.

### 2-1. Normalization Function of Time and Date Expression

The information processing terminal 1 has a function (normalization function) for converting time and date expression included in an input character string into a predetermined format. The information processing terminal 1 converts, by the normalization function, time and date expression expressed by a character string such as "today" into a numeric string representing year, month, and day such as "2015/01/27" or a numeric string representing hour, minute, and second. The conversion processing of the time and date expression corresponds to processing of obtaining a time and date represented by the time and date expression included in the input character string by using certain time and date as a reference.

Further, the information processing terminal 1 has a function of extracting a character string representing time and date expression from the input character string. The information processing terminal 1 has a time and date expression dictionary in which character strings representing dime and date expression are registered.

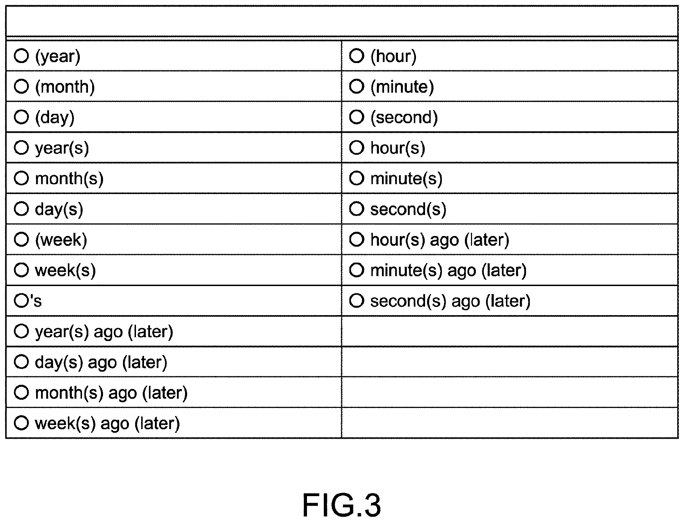

Fig. 3 is a diagram showing an example of time and date expression registered in the time and date expression dictionary.

As shown in Fig. 3, in the time and date expression dictionary, various kinds of expression representing time, various kinds of expression representing a date, various kinds of expression representing the day of the week, various kinds of expression representing a week, various kinds of expression representing a month, and various kinds of expression representing a year are registered. Further, various kinds of expression representing a second, various kinds of expression representing a minute, and various kinds of expression representing an hour are registered. Also various kinds of expression representing a season, various kinds of expression representing a period, and the like are registered in the time and date expression dictionary.

The information processing terminal 1 refers to such a time and date expression dictionary, and extracts the registered character string as time and date expression.

The information processing terminal 1 has a plurality of time and date basic functions for operating the extracted time and date expression.

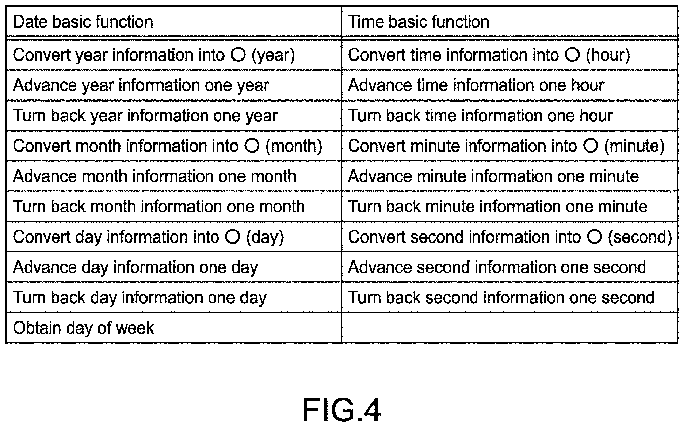

Fig. 4 is a diagram showing an example of a time and date basic function.

The time and date basic function includes a date basic function and a time basic function. The date basic function includes functions of "convert year information into o year", "advance year information one year", "turn back year information one year", ..., and "obtain the day of the week".

For example, the date basic function of "convert year information into o year" is a function of converting the reference year into a certain year such as "2015". The date basic function of "advance year information one year" is a function of converting the reference year to the following year. The date basic function of "turn back year information one year" is a function of converting the reference year to the previous year. The date basic function of "obtain the day of the week" is a function of converting the reference day into any one of "Monday", "Tuesday", "Wednesday", "Thursday", "Friday", "Saturday", and "Sunday".

The time basic function includes functions of "convert time information into o hour", "advance time information one hour", "turn back time information one hour", ..., and "turn back second information one second".

For example, "convert time information into o hour" is a function of converting the reference time into certain time. The time basic function of "advance time information one hour" is a function of converting the reference time into the time one hour later. The time basic function of "turn back time information one hour" is a function of converting the reference time into the time one hour before.

Further, the information processing terminal 1 has a conversion rule dictionary. In the conversion rule dictionary, conversion rules are registered in relation to the respective kinds of time and date expression. The conversion rule represents which time and date basic function is used to obtain the time and date.

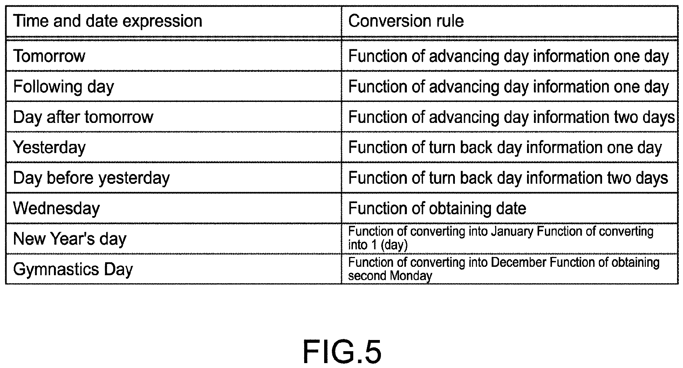

Fig. 5 is a diagram showing an example of a conversion rule registered in the conversion rule dictionary.

In the example shown in Fig. 5, conversion rules corresponding to the respective kinds of time and date expression of "tomorrow", "following day", "day after tomorrow", "yesterday", "day before yesterday", "Wednesday" "New Year's day", and "Gymnastics Day" are shown. In the conversion rule dictionary, conversion rules corresponding to various kinds of time and date expression such as "following week", "this month", "a.m.", and "p.m." are also registered.

For example, the conversion rule of "function of advancing day information one day" is registered in relation to the time and date expression of "tomorrow". This represents that in the case where the time and date expression of "tomorrow" is extracted, the "function of advancing day information one day" is used for performing conversion processing.

The conversion rule can be registered by the user himself/herself. Further, it is also possible to automatically register the conversion rule on the basis of the information managed by the application 12.

In the information processing terminal 1, the time and date expression is converted in accordance with such a conversion rule.

### 2-2. Function of Holding Present Time and Date and User-Assumed Time and Date

The information processing terminal 1 has a function of holding the present time and date representing the time and date at the present and user-assumed time and date that is the time and date considered to be assumed by a user.

Present time and date information representing the present time and date and user-assumed time and date information representing the user-assumed time and date are held in the form of "year, month, day, hour, minute, second", for example. The information processing terminal 1 updates the present time and date information when processing utterance of the user, and updates the user-assumed time and date information through utterance of the user at any time.

For example, the information processing terminal 1 estimates the time and date indicated by an instruction word such as "that time" included in utterance of the user by using an anaphoric analysis technology, and holds the estimated time and date as the user-assumed time and date. Further, the information processing terminal 1 estimates the time and date indicated by habit expression such as "usual time" included in utterance of the user by using a context processing technology, and holds the estimated time and date as the user-assumed time and date.

It is also possible to estimate the user-assumed time and date on the basis of not utterance of the user but a plurality of pieces of information such as information included in a screen viewed by the user and information on line of sight of the user.

For example, in the case where the user uses a function of displaying time and date information such as a calendar application, the information processing terminal 1 estimates the time and date to which the user is paying attention such as the time and date displayed on the screen and the time and date selected by the user as the user-assumed time and date. Every time the user operates and updates the time and date to which he/she is paying attention, the information processing terminal 1 holds the updated time and date as new user-assumed time and date.

Further, in the case where a plurality of pieces of time and date information are displayed on the screen, the information processing terminal 1 detects to which time and date information the user is paying attention, and holds the detected time and date as the user-assumed time and date. The camera provided to the casing of the information processing terminal 1 is used for detecting the line of sight of such a user, and the like.

The information processing terminal 1 determines, on the basis of the time and date expression included in utterance of the user, whether to perform conversion processing on the basis of the present time and date or to perform conversion processing on the basis of the user-assumed time and date. The information processing terminal 1 has a reference expression list used for the determination.

The reference expression list is a list in which the time and date expression and the reference time and date are associated with each other. The reference time and date is a time and date used as a reference of conversion.

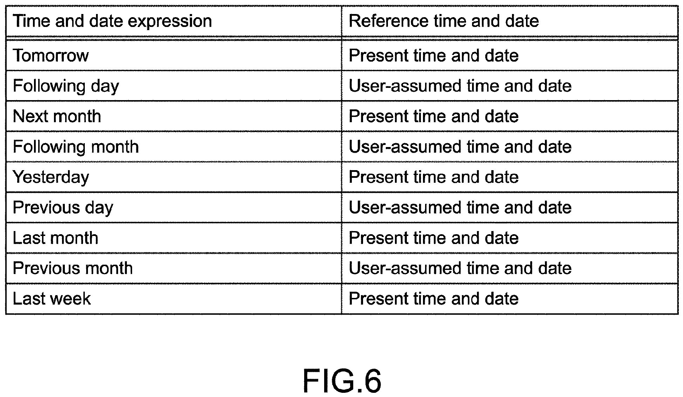

Fig. 6 is a diagram showing an example of the reference expression list.

In the example of Fig. 6, reference time and dates corresponding to the respective kinds of time and date expression of "tomorrow", "following day", "next month", "following month", "yesterday", "previous day", "last month", "previous month", and "last week" are shown. For example, the reference time and date corresponding to "tomorrow" is the present time and date, and the reference time and date corresponding to "following day" is the user-assumed time and date.

The information processing terminal 1 decomposes a character string input by utterance of the user into word strings by analyzing the character string, and extracts time and date expression. The information processing terminal 1 performs matching between the extracted time and date expression and the reference expression list. In the case where the extracted time and date expression is registered in the time and date expression list, the information processing terminal 1 performs conversion of the extracted time and date expression on the basis of the present time and date or the user-assumed time and date set as the reference time and date.

For example, in the case where utterance of the user includes "tomorrow", the information processing terminal 1 performs conversion of the time and date expression by using the present time and date as the reference time and date. Further, in the case where utterance of the user includes "following day", the information processing terminal 1 performs conversion of the time and date expression by using the user-assumed time and date as the reference time and date.

Conversion of time and date expression that is not registered in the reference expression list is performed by using, for example, the user-assumed time and date as the reference time and date. Note that in the case where the user-assumed time and date is not set (not held), conversion of the time and date expression is performed by using the present time and date as the reference time and date.

### 2-3. Function of Determining Past/Future Expression

The information processing terminal 1 determines whether the time and date expression included in utterance of the user represents the past or the future. In the case where the time and date expression included in the utterance of the user represents the past, the information processing terminal 1 performs conversion of time and date expression so as to obtain a time and date of the past. In the case where the time and date expression represents the future, the information processing terminal 1 performs conversion of time and date expression so as to obtain a time and date of the future. As described above, the conversion of the time and date expression is performed in accordance with the intention of the user.

The information processing terminal 1 includes an utterance content classifier that grasps the outline of the content of utterance of the user. The utterance content classifier classifies the content of the utterance of the user. Each classification is represented by a combination of a domain to be operated and a goal to be executed.

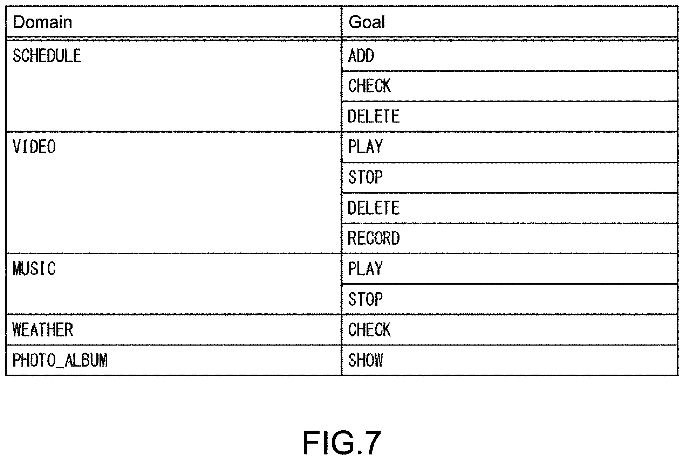

Fig. 7 is a diagram showing an example of classification of content of utterance.

In the example shown in Fig. 7, domain names of "SCHEDULE", "VIDEO", "MUSIC", "WEATHER", and "PHOTO_ALBUM" and goal names of the respective domains are registered in relation to each other.

For example, goals of "ADD", "CHECK", and "DELETE" are registered in relation to "SCHEDULE". In the case where the content of utterance relates to "SCHEDULE", the utterance is classified into any of three categories of domain:SCHEDULE - goal:ADD, domain:SCHEDULE - goal:CHECK, and domain:SCHEDULE - goal:DELETE. As described above, there are a plurality of goals in the same domain.

For example, the domain of "SCHEDULE" is selected in the case where the utterance includes a keyword relating to a schedule, and the domain of "VIDEO" is selected in the case where the utterance includes a keyword relating to a program. The domain of "MUSIC" is selected in the case where the utterance includes a keyword relating to music, and the domain of "WEATHER" is selected in the case where the utterance includes a keyword relating to a weather. The domain of "PHOTO_ALBUM" is selected in the case where the utterance includes a keyword relating to a photograph. Also each goal is selected on the basis of a keyword included in the utterance. In the information processing terminal 1, a keyword used for selecting such a domain and a goal is stored.

For example, in the case where "I want to listen to music" is uttered, the utterance is classified into the category of domain:MUSIC - goal:PLAY.

The information processing terminal 1 has a processing direction list indicating whether conversion of the time and date expression should be processed in the past direction or the future direction for each combination of domain and goal (for each classification). Processing in the past direction represents that the time and date expression is converted so as to obtain a time and date of the past, and processing in the future direction represents that the time and date expression is converted so as to obtain a time and date of the future.

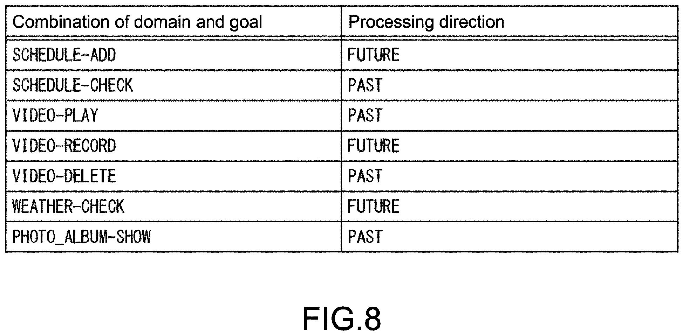

Fig. 8 is a diagram showing an example of the processing direction list.

In the example shown in Fig. 8, processing in the future direction (FUTURE) is associated with the combination of domain:SCHEDULE - goal:ADD. Further, processing in the past direction (PAST) is associated with the combination of domain:SCHEDULE - goal:CHECK.

The processing direction is associated also with each combination of domain:VIDEO - goal:PLAY, domain:VIDEO - goal:RECORD, domain:VIDEO - goal:DELETE, domain:WEATHER - goal:CHECK, and domain:PHOTO_ALBUM - goal:SHOW.

The information processing terminal 1 determines the processing direction by performing matching between the classification result of the domain-goal by the utterance content classifier and the processing direction list, and performs conversion of the time and date expression. In the case where the classification result of the domain-goal is not registered in the processing direction list, the information processing terminal 1 performs conversion of the time and date expression so as to perform processing in the future direction.

With the above-mentioned functions, the information processing terminal 1 is capable of correctly recognize the time and date represented by the time and date expression uttered by the user in accordance with the user's assumption.

Further, by performing processing depending on the recognized time and date, the information processing terminal 1 is capable of avoiding performing processing different from what the user assumes.

For example, assumption is made that the present date is December 31, 2014 and a user utters "following day" when January 10, 2015 of the New Year is selected on the calendar. In this case, the information processing terminal 1 is capable of outputting the result assumed by the user by performing processing of "advancing the date one day" with January 10, 2015 as a reference and displaying information on January 11, 2015. If in the case where processing of "advancing the date one day" with December 31, 2014 that is the present date as a reference is performed and information on January 1, 2015 is displayed, the result is not one assumed by the user and is not favorable.

The user is capable of reduce the trouble of inputting the time and date again and the like due to the result as expected being not displayed.

Processing of the information processing terminal 1 realized by the above-mentioned functions will be described later with reference to a flowchart.

### <3. Configuration Example of Information Processing Terminal 1>

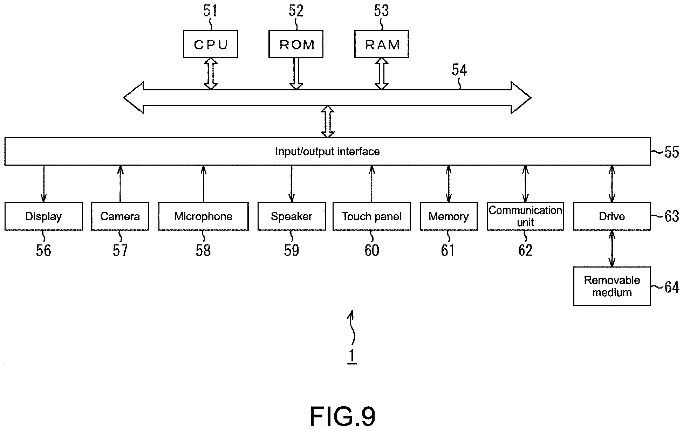

Fig. 9 is a block diagram showing a hardware configuration example of the information processing terminal 1.

A CPU (Central Processing Unit) 51, a ROM(Read Only Memory) 52, and a RAM (Random Access Memory) 53 are connected to each other by a bus 54.

To the bus 54, an input/output interface 55 is connected. To the input/output interface 55, a display 56, a camera 57, a microphone 58, and a speaker 59 are connected. To the input/output interface 55, a touch panel 60, a memory 61, a communication unit 62, and a drive 63 are connected.

The display 56 displays various kinds of information under control of the CPU 51.

The camera 57 takes various images such as an image including the face of a user. In the CPU 51, for example, the line of sight of the user is detected on the basis of the image taken by the camera 57.

The microphone 58 collects utterance of a user. In the CPU 51, the utterance collected by the microphone 58 is converted into a character string, and extraction and conversion of time and date expression are performed.

The speaker 59 outputs various sounds such as speech.

The touch panel 60 is provided by being laminated on the display 56. The touch panel 60 detects a user's operation, and outputs information representing the content of the operation to the CPU 51.

The memory 61 includes a non-volatile memory or the like. The memory 61 stores various kinds of data such as an application executed by the CPU 51.

The communication unit 62 includes a communication module of a wireless LAN or the like, and performs communication with an external apparatus.

The drive 63 writes data to a removable medium 64 such as a memory card and reads data from the removable medium 64.

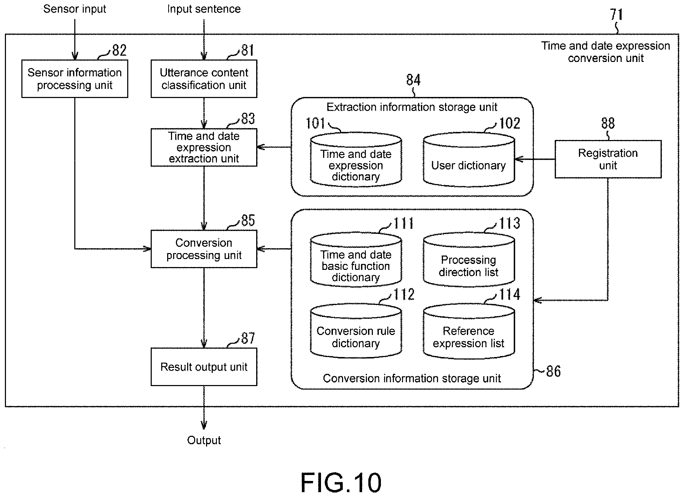

Fig. 10 is a block diagram showing a functional configuration example of the information processing terminal 1.

At least a part of functional units constituting a time and date expression conversion unit 71 shown in Fig. 10 is realized by the CPU 51 shown in Fig. 9 executing the time and date expression conversion application 11. The time and date expression conversion unit 71 includes an utterance content classification unit 81, a sensor information processing unit 82, a time and date expression extraction unit 83, an extraction information storage unit 84, a conversion processing unit 85, a conversion information storage unit 86, a result output unit 87, and a registration unit 88.

To the utterance content classification unit 81, for example, a character string obtained by recognizing the content of utterance of the user, or a character string input by the user using a keyboard or the like is input as an input sentence. Further, to the sensor information processing unit 82, an image taken by the camera 57, information representing the content of operation on the touch panel 60, or the like is input as sensor data.

The utterance content classification unit 81 analyzes an input sentence, and classifies the content of utterance of the user. The utterance content classification unit 81 has a classification list described with reference to Fig. 7. Various text classification technologies can be used for classification by the utterance content classification unit 81. The utterance content classification unit 81 outputs the classification result represented as a combination of a domain and a goal to the time and date expression extraction unit 83 together with the input sentence.

The sensor information processing unit 82 analyzes sensor data and outputs information representing the analysis result to the conversion processing unit 85. For example, the sensor information processing unit 82 recognizes a pupil or iris of the user's eyes in an image taken by the camera 57, and detects the direction of line of sight on the basis of a relationship between the reference position such as the position of the inner corner of the eye and the position of the pupil or iris. The sensor information processing unit 82 specifies the position on the display 56 at the end of the line of sight as the position of the viewpoint, and outputs information representing the position of the viewpoint. Further, the sensor information processing unit 82 outputs information representing the position on the screen operated by the user.

The time and date expression extraction unit 83 refers to a time and date expression dictionary 101 described with reference to Fig. 3, and extracts time and date expression included in the input sentence. Further, the time and date expression extraction unit 83 extracts time and date expression registered in a user dictionary 102 from the input sentence as appropriate. The time and date expression extraction unit 83 outputs the extracted time and date expression together with the input sentence and the classification result of the content of utterance to the conversion processing unit 85.

The extraction information storage unit 84 stores the time and date expression dictionary 101 and the user dictionary 102.

The conversion processing unit 85 specifies the user-assumed time and date on the basis of the input sentence and information supplied from the sensor information processing unit 82, and holds the present time and date and the user-assumed time and date. The conversion processing unit 85 updates the present time and date and the user-assumed time and date as appropriate. Further, the conversion processing unit 85 performs matching between the time and date expression extracted by the time and date expression extraction unit 83 and a reference expression list 114, and determines the reference time and date.

The conversion processing unit 85 refers to a processing direction list 113, and determines the processing direction depending on the classification result of the utterance content by the utterance content classification unit 81. The conversion processing unit 85 appropriately refers to the determined processing direction, and selects, from a conversion rule dictionary 112, the conversion rule depending on the extracted time and date expression. The conversion processing unit 85 reads the time and date basic function specified by the selected conversion rule from a time and date basic function dictionary 111, and performs, by using the read time and date basic function, conversion of the time and date expression extracted by the time and date expression extraction unit 83. The conversion processing unit 85 outputs the time and date information obtained by the conversion processing to the result output unit 87. Details of the conversion processing unit 85 will be described later.

The conversion information storage unit 86 stores the time and date basic function dictionary 111, the conversion rule dictionary 112, the processing direction list 113, and the reference expression list 114.

The result output unit 87 outputs the time and date information supplied from the conversion processing unit 85 as a numeric string representing year, month, and day in a predetermined format such as "2015/01/27" or a numeric string representing hour, minute, and second. The numeric string output from the result output unit 87 is processed by the application 12.

The registration unit 88 registers the time and date expression input by the user or the time and date expression acquired from information managed by the application 12 in the user dictionary 102. Further, the registration unit 88 registers the conversion rule input by the user or the conversion rule acquired from information managed by the application 12 in the conversion rule dictionary 112.

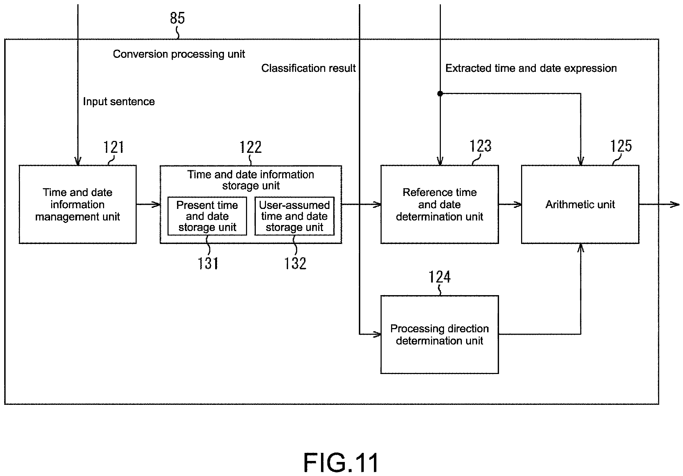

Fig. 11 is a block diagram showing a configuration example of the conversion processing unit 85.

The conversion processing unit 85 includes a time and date information management unit 121, a time and date information storage unit 122, a reference time and date determination unit 123, a processing direction determination unit 124, and an arithmetic unit 125. The input sentence output from the time and date expression extraction unit 83 is input to the time and date information management unit 121, and the classification result of content of utterance is input to the processing direction determination unit 124. The time and date expression extracted by the time and date expression extraction unit 83 is input to the reference time and date determination unit 123 and the arithmetic unit 125.

The time and date information management unit 121 manages the present time and date and the user-assumed time and date by causing the time and date information storage unit 122 to store the present time and date information and the user-assumed time and date information. The time and date information management unit 121 updates the present time and date information stored in the time and date information storage unit 122 every time an input sentence is input, for example.

The time and date information management unit 121 analyzes an input sentence and specifies a user-assumed time and date as described above. The time and date information management unit 121 detects a position of the viewpoint of the user on the basis of information supplied from the sensor information processing unit 82, and specifies, as the user-assumed time and date, the time and date whose information is displayed on the position of the viewpoint. Further, the time and date information management unit 121 detects the position operated by the user on the basis of information supplied from the sensor information processing unit 82, and specifies, as the user-assumed time and date, the time and date whose information is displayed on the operated position.

The time and date information storage unit 122 includes a present time and date storage unit 131 and a user-assumed time and date storage unit 132. The present time and date storage unit 131 stores present time and date information. The user-assumed time and date storage unit 132 stores user-assumed time and date information.

The reference time and date determination unit 123 performs matching between time and date expression extracted from an input sentence and the reference expression list 114 stored in the conversion information storage unit 86, and determines the reference time and date. In the case of determining that the present time and date is used as a reference time and date, the reference time and date determination unit 123 reads the present time and date information from the present time and date storage unit 131. Further, in the case of determining that the user-assumed time and date is used as a reference time and date, the reference time and date determination unit 123 reads the user-assumed time and date information from the user-assumed time and date storage unit 132. The reference time and date determination unit 123 outputs the present time and date information or the user-assumed time and date information to the arithmetic unit 125.

The processing direction determination unit 124 performs matching between the classification result of content of utterance of the user and the processing direction list 113 stored in the conversion information storage unit 86, and determines the processing direction of conversion processing. The processing direction determination unit 124 outputs information representing the determined processing direction to the arithmetic unit 125.

The arithmetic unit 125 selects, from the conversion rule dictionary 112, the conversion rule corresponding to the time and date expression extracted from the input sentence, and reads the time and date basic function specified by the selected conversion rule from the time and date basic function dictionary 111. The arithmetic unit 125 performs conversion of the time and date expression by using the read time and date basic function. The arithmetic unit 125 performs, for example, selection of the conversion rule in accordance with the processing direction determined by the processing direction determination unit 124.

### <4. Operation of Information Processing Terminal 1>

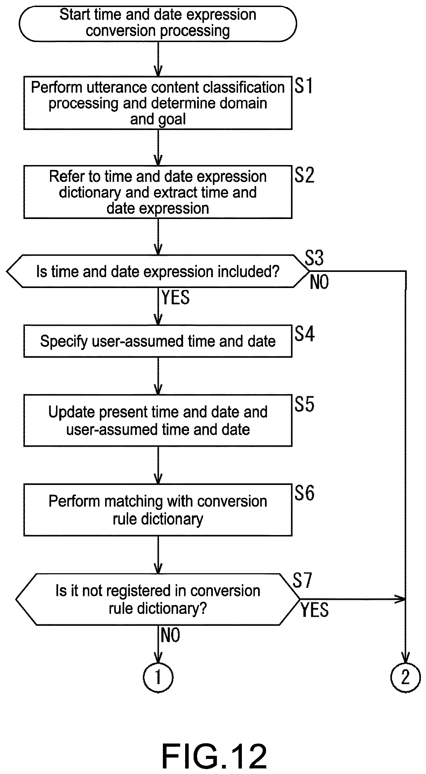

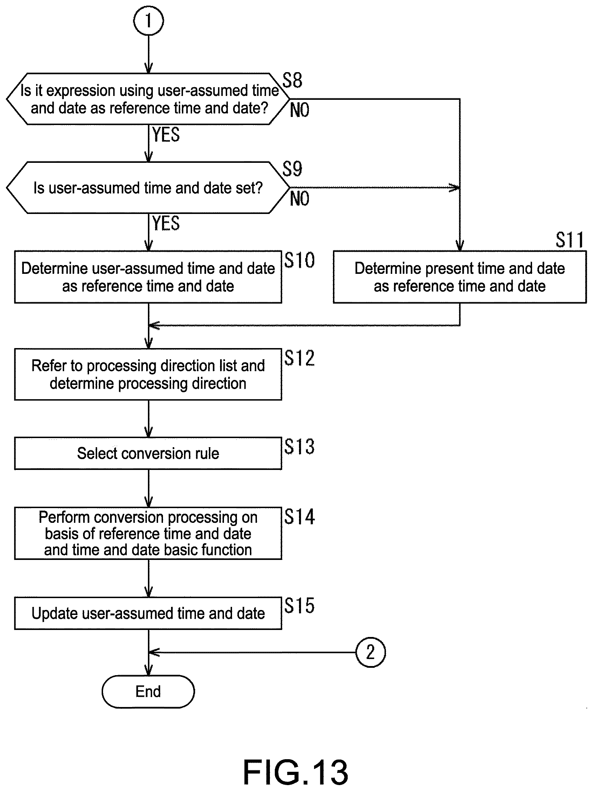

Next, time and date expression conversion processing of the information processing terminal 1 having the configuration described above will be described with reference to flowcharts of Fig. 12 and Fig. 13. The time and date expression conversion processing is started when the input sentence representing the content of utterance of the user is input to the time and date expression conversion unit 71.

In Step S1, the utterance content classification unit 81 performs utterance content classification processing on the input sentence to classify the content of utterance of the user. The utterance content classification unit 81 determines a combination of a domain and a goal in accordance with the classification list.

In Step S2, the time and date expression extraction unit 83 refers to the time and date expression dictionary 101, and extracts the time and date expression included in the input sentence.

In Step S3, the time and date expression extraction unit 83 determines whether or not utterance of the user includes time and date expression, and terminates the processing in the case of determining that no time and date expression is included. In the case of determining that utterance of the user includes time and date expression, the processing proceeds to Step S4.

In Step S4, the time and date information management unit 121 of the conversion processing unit 85 specifies the user-assumed time and date by, for example, analyzing the input sentence.

In Step S5, the time and date information management unit 121 updates the present time and date information stored in the present time and date storage unit 131. Further, the time and date information management unit 121 updates the user-assumed time and date information stored in the user-assumed time and date storage unit 132 by causing the user-assumed time and date storage unit 132 to store information on the user-assumed time and date specified in Step S4.

In Step S6, the arithmetic unit 125 performs matching between the extracted time and date expression and the conversion rule dictionary 112.

In Step S7, the arithmetic unit 125 determines whether or not the conversion rule of the extracted time and date expression is registered in the conversion rule dictionary 112, and terminates the processing in the case of determining that it is not registered. In the case where it is determined that the conversion rule is registered in the conversion rule dictionary 112, the processing proceeds to Step S8.

In Step S8, the reference time and date determination unit 123 performs matching between the extracted time and date expression and the reference expression list 114, and determines whether or not the extracted time and date expression is expression using the user-assumed time and date as a reference time and date. In the case of the example described with reference to Fig. 6, it is determined that it is expression using the user-assumed time and date as a reference time and date when the extracted time and date expression is "following day", "following month", "previous day", or "previous month".

In the case where it is determined that it is expression using the user-assumed time and date as a reference time and date in Step S8, the reference time and date determination unit 123 determined whether or not the user-assumed time and date is set in Step S9. In the case where the user-assumed time and date information is stored in the user-assumed time and date storage unit 132 and it is determined that the user-assumed time and date is set in step S9, the reference time and date determination unit 123 determines the user-assumed time and date as a reference time and date in Step S10.

In the case of determining that the extracted time and date expression is not expression using the user-assumed time and date as a reference time and date in Step S8, the reference time and date determination unit 123 determines the present time and date as a reference time and date in Step S11. Similarly in the case of determining that the user-assumed time and date is not set in Step S9, the reference time and date determination unit 123 determines the present time and date as a reference time and date in Step S11.

In Step S12, the processing direction determination unit 124 performs matching between the classification result of content of utterance of the user and the processing direction list 113, and determines the processing direction of conversion processing.

In Step S13, the arithmetic unit 125 selects, from the conversion rule dictionary 112, the conversion rule corresponding to the time and date expression extracted from the input sentence. The arithmetic unit 125 reads, from the time and date basic function dictionary 111, the time and date basic function specified by the selected conversion rule.

In Step S14, the arithmetic unit 125 performs conversion processing of time and date expression by using the read time and date basic function. The reference time and date is the user-assumed time and date determined in Step S10 or the present time and date determined in Step S11. The information representing the time and date obtained by the conversion processing is supplied from the arithmetic unit 125 to the result output unit 87 and output to the application 12.

In Step S15, the time and date information management unit 121 updates the user-assumed time and date by causing the user-assumed time and date storage unit 132 to store the information on the time and date obtained by the conversion processing. That is, the time and date obtained by the conversion processing is used for the subsequent processing as the user-assumed time and date.

After the user-assumed time and date is updated, the processing is finished. The above processing is repeated each time an input sentence is input according to utterance of the user.

With the above processing, the information processing terminal 1 is capable of interpreting time and date expression included in utterance of the user as assumed by the user. Further, the application 12 is capable of performing processing assumed by the user by performing processing on the basis of the time and date expression interpreted by the time and date expression conversion application 11.

### <5. Specific Example>

Next, a specific example of processing of the information processing terminal 1 including the above processing of the time and date expression conversion application 11 will be described.

### 5-1. Example of Scheduler Operation

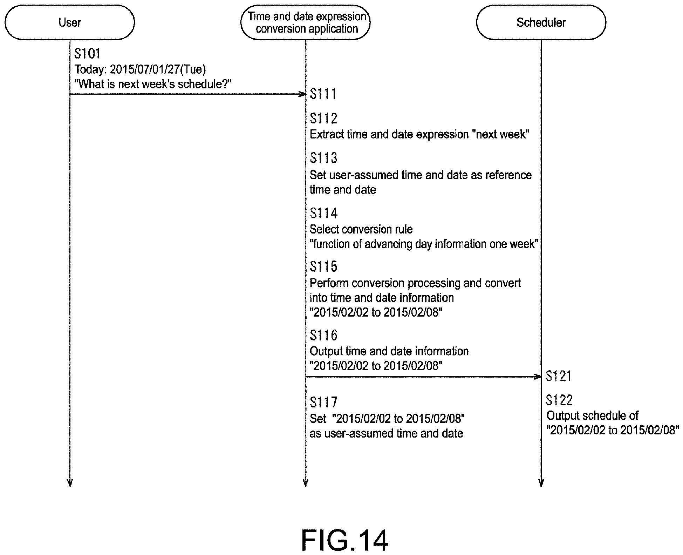

A series of processing for operating the scheduler as the application 12 by speech will be described with reference to Figs. 14 to 17. Note that assumption is made that today (day when the user is operating) is 2015/01/27(Tue).

In Step S101 in Fig. 14, the user utters "what is next week's schedule?". The speech recognition application of the information processing terminal 1 recognizes utterance of the user, and outputs the input sentence representing the content of the utterance. The input sentence is input to the time and date expression conversion unit 71 realized by the time and date expression conversion application 11.

In Step S111, the time and date expression conversion unit 71 acquires the input sentence supplied from the speech recognition application. Classification of the utterance content by the utterance content classification unit 81 is appropriately performed.

In Step S112, the time and date expression extraction unit 83 refers to the time and date expression dictionary 101, and extracts time and date expression of "next week".

In Step S113, the reference time and date determination unit 123 of the conversion processing unit 85 sets the user-assumed time and date as a reference time and date on the basis of the reference expression list 114.

In Step S114, the arithmetic unit 125 selects, on the basis of the conversion rule dictionary 112, conversion rule of "function of advancing day information one week" registered in relation to the time and date expression "next week".

In Step S115, the arithmetic unit 125 reads the time and date basic function of "advancing day information one week" from the time and date basic function dictionary 111, and converts "next week" into "2015/02/02 to 2015/02/08" that is the time and date information of the following week of the week including the reference time and date of "2015/01/27". That is, the time and date expression of "next week" is converted into the time and date information having the range of "2015/02/02 to 2015/02/08".

In Step S116, the result output unit 87 outputs a numeric string representing "2015/02/02 to 2015/02/08" to the scheduler as time and date information.

In Step S117, the time and date information management unit 121 updates the user-assumed time and date by causing the user-assumed time and date storage unit 132 to store "2015/02/02 to 2015/02/08".

Meanwhile, in Step S121, the scheduler receives the numeric string representing "2015/02/02 to 2015/02/08" supplied from the result output unit 87.

In Step S122, the scheduler acquires a schedule between "2015/02/02 to 2015/02/08", and outputs the schedule by, for example, causing the display 56 to display it. The scheduler manages information on the schedule between "2015/02/02 to 2015/02/08" registered by the user by, for example, causing the memory 61 to store it.

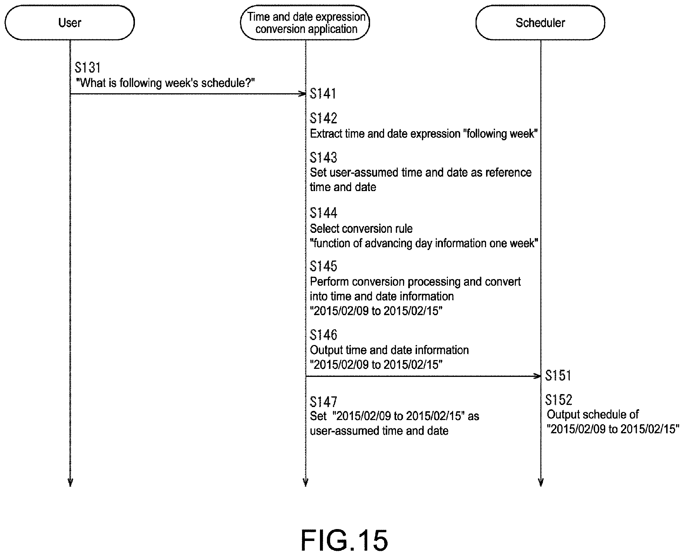

When "2015/02/02 to 2015/02/08" is set as the user-assumed time and date, the user then utters "what is the following week's schedule?" in Step S131 in Fig. 15. The speech recognition application of the information processing terminal 1 recognizes utterance of the user, and outputs the input sentence representing the content of the utterance.

In Step S141, the time and date expression conversion unit 71 acquires the input sentence supplied from the speech recognition application.

In Step S142, the time and date expression extraction unit 83 refers to the time and date expression dictionary 101, and extracts the time and date expression of "following week".

In Step S143, the reference time and date determination unit 123 of the conversion processing unit 85 sets, on the basis of the reference expression list 114, the user-assumed time and date as a reference time and date.

In Step S144, the arithmetic unit 125 selects, on the basis of the conversion rule dictionary 112, the conversion rule of "function of advancing week information one week" registered in relation to the time and date expression of "following week".

In Step S145, the arithmetic unit 125 reads the time and date basic function of "function of advancing week information one week" from the time and date basic function dictionary 111, and converts "following week" into "2015/02/09 to 2015/02/15" that is the time and date information of the following week of the week of the reference time and date of "2015/02/02 to 2015/02/08".

In Step S146, the result output unit 87 outputs the numeric string representing "2015/02/09 to 2015/02/15" to the scheduler as time and date information.

In Step S147, the time and date information management unit 121 updates the user-assumed time and date by causing the user-assumed time and date storage unit 132 to store "2015/02/09 to 2015/02/15".

Meanwhile, in Step S151, the scheduler receives the numeric string representing "2015/02/09 to 2015/02/15" supplied from the result output unit 87.

In Step S152, the scheduler acquires a schedule between "2015/02/09 to 2015/02/15" and outputs the schedule by, for example, causing the display 56 to display it.

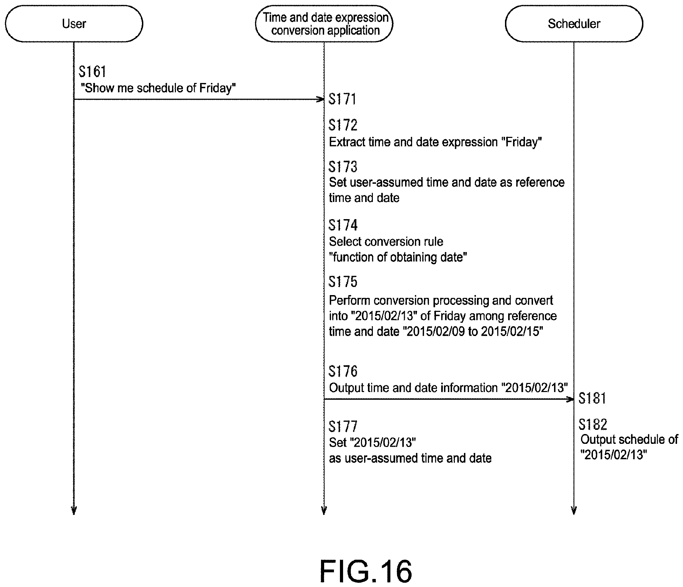

When "2015/02/09 to 2015/02/15" is set as the user-assumed time and date, the user then utters "show me Friday's schedule" in Step S161 in Fig. 16. The speech recognition application of the information processing terminal 1 recognizes the utterance of the user, and outputs the input sentence representing the content of the utterance.

In Step S171, the time and date expression conversion unit 71 acquires the input sentence supplied from the speech recognition application.

In Step S172, the time and date expression extraction unit 83 refers to the time and date expression dictionary 101, and extracts time and date expression of "Friday".

In Step S173, the reference time and date determination unit 123 of the conversion processing unit 85 sets, on the basis of the reference expression list 114, the user-assumed time and date as a reference time and date.

In Step S174, the arithmetic unit 125 selects, on the basis of the conversion rule dictionary 112, the conversion rule of "function of obtaining a date" registered in relation to the time and date expression of "Friday".

In Step S175, the arithmetic unit 125 reads the time and date basic function of "obtaining a date" from the time and date basic function dictionary 111, and converts "Friday" into "2015/02/13" that is time and date information of Friday of the week of the reference time and date of "2015/02/09 to 2015/02/15".

In Step S176, the result output unit 87 outputs the numeric string representing "2015/02/13" to the scheduler as time and date information.

In Step S177, the time and date information management unit 121 updates the user-assumed time and date by causing the user-assumed time and date storage unit 132 to store "2015/02/13".

Meanwhile, in Step S181, the scheduler receives the numeric string representing "2015/02/13" supplied from the result output unit 87.

In Step S182, the scheduler acquires a schedule of "2015/02/13" and outputs the schedule by, for example, causing the display 56 to display it.

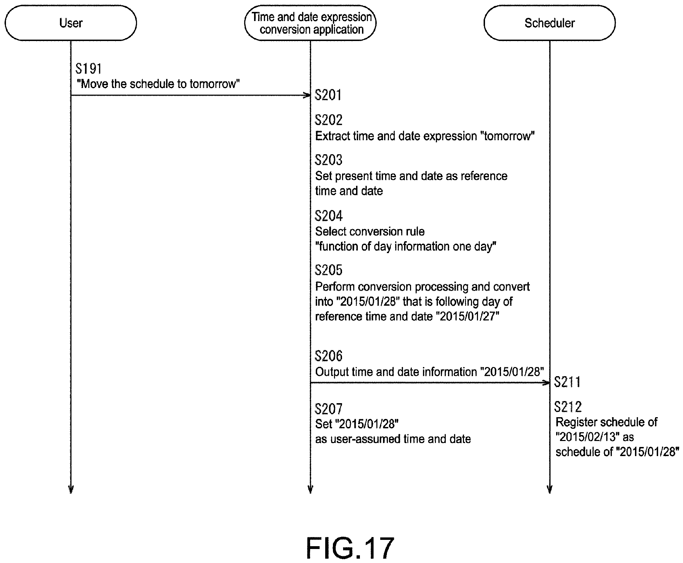

When "2015/02/13" is set as the user-assumed time and date, the user then utters "move the schedule to tomorrow" in Step S191 in Fig. 17. The speech recognition application of the information processing terminal 1 recognizes utterance of the user, and outputs the input sentence representing the content of the utterance.

In Step S201, the time and date expression conversion unit 71 acquires the input sentence supplied from the speech recognition application.

In Step S202, the time and date expression extraction unit 83 refers to the time and date expression dictionary 101, and extracts time and date expression of "tomorrow".

In Step S203, the reference time and date determination unit 123 of the conversion processing unit 85 sets, on the basis of the reference expression list 114, the present time and date as a reference time and date.

In Step S204, the arithmetic unit 125 selects, on the basis of the conversion rule dictionary 112, the conversion rule of "function of advancing day information one day" registered in relation to the time and date expression of "tomorrow".

In Step S205, the arithmetic unit 125 reads the time and date basic function of "advancing day information one day" from the time and date basic function dictionary 111, and converts "tomorrow" into "2015/01/28" that is the time and date information of the following day of the reference time and date (present time and date) of "2015/01/27".

In Step S206, the result output unit 87 outputs the numeric string representing "2015/01/28" to the scheduler as time and date information.

In Step S207, the time and date information management unit 121 updates the user-assumed time and date by causing the user-assumed time and date storage unit 132 to store "2015/01/28".

Meanwhile, in Step S211, the scheduler receives the numeric string representing "2015/01/28" supplied from the result output unit 87.

In Step S212, the scheduler registers the schedule of "2015/02/13" as a schedule of "2015/01/28" and cancels the schedule of "2015/02/13".

As described above, the user is capable of operating the scheduler with speech, viewing the registered schedule, and registering a schedule.

### 5-2. Example of Registering User Knowledge

The user is capable of adding time and date expression and conversion rules himself/herself. The registration unit 88 registers time and date expression in the user dictionary 102 and registers a conversion rule in the conversion rule dictionary 112 in accordance with the user input.

For example, in the case where the user inputs a keyword "birthday" and information representing that "birthday" = "March 1" is input, the registration unit 88 registers the "birthday" in the user dictionary 102 as time and date expression. Further, the registration unit 88 registers the "birthday" as time and date expression and "function of converting birthday into March 1" in the conversion rule dictionary 112 in relation to each other. It does not necessarily need to register it in the conversion rule dictionary 112. A user dictionary in a similar format to that of the conversion rule dictionary 112 may be prepared, and it may be registered in the user dictionary.

In this case, for example, in the case where the user utters "register schedule on birthday", the time and date expression extraction unit 83 refers to the user dictionary 102 and extracts time and date expression of "birthday".

The arithmetic unit 125 of the conversion processing unit 85 selects, on the basis of the conversion rule dictionary 112, "function of converting birthday into March 1" that is the conversion rule registered in relation to the time and date expression of "birthday". The arithmetic unit 125 converts "Birthday" into the time and date information of "2015/03/01" in accordance with the selected time and date basic function.

The result output unit 87 outputs the numeric string representing "2015/03/01" to the scheduler as the application 12.

The user is also capable of adding modifiers such as "Yamada's" to the keyword. In this case, a conversion rule is registered in relation to the keyword of "Yamada's birthday". Further, it is also possible to register abbreviations such as "Yama-san" = "Yamada".

In this case, for example, in the case where the user utters "Yama-san's birthday", the time and date expression extraction unit 83 refers to the user dictionary 102, and extracts the time and date expression "Yamada's birthday" by replacing the part of "Yama-san". Thereafter, similarly, the time and date expression of "Yamada's birthday" is converted into time and date information in accordance with the conversion rule.

Note that in the case where a plurality of abbreviated names relating to "Yama-san" such as abbreviation registration of "Yama-san" = "Yamada" and abbreviation registration of "Yama-san" = "Yamamoto" are registered, the time and date expression extraction unit 83 extracts both "Yamada's birthday" and "Yamamoto's birthday" as candidates for time and date expression.

The conversion processing unit 85 converts the time and date expression of "Yamada's birthday" into time and date information, and "Yamamoto's birthday" into time and date information in accordance with the conversion rule.

For example, the scheduler that has received two pieces of converted time and date information displays the two time and dates and causes the user to select any one of them. In the case where only one of the conversion rule for "Yamada's birthday" and the conversion rule for "Yamamoto's birthday" is registered, only the time and date acquired in accordance with the registered conversion rule is output.

By registering, for example, a conversion rule of converting time and date expression of "date of birth" into "March 1, 1980" by the user, it is possible to perform also processing using expression other than month and day.

As described above, the user is capable of arbitrarily customizing character strings to be extracted as time and date expression and conversion rules.

5-3. Example of Updating Dictionary on Basis of Information Managed by Application

The registration unit 88 is also capable of acquiring information managed by the application 12, and registering time and date expression and a conversion rule by using the acquired information.

Now, a case of using information managed by an album application will be described. The album application manages information such as a file name, a shooting place, a shooting time, and a comment as metadata of each photograph. For example, assumption is made that "*****.data", "sports day", and "20141013-124254" are managed as the file name, comment, and shooting time of a photograph, respectively.

The registration unit 88 acquires the information managed by the album application, and registers "sports day" in the user dictionary 102 as time and date expression. Further, the registration unit 88 registers, as a conversion rule, "sports day" as time and date expression and "function of converting sports day into October 13, 2014" in the conversion rule dictionary 112 in relation to each other.

In this case, for example, in the case where the user searching for a photograph file utters "sports day", the time and date expression extraction unit 83 refers to the user dictionary 102 and extracts the time and date expression of "sports day".

The arithmetic unit 125 of the conversion processing unit 85 selects, on the basis of the conversion rule dictionary 112, "function of converting sports day into October 13, 2014" that is the conversion rule registered in relation to the time and date expression of "sports day". The arithmetic unit 125 converts "sports day" into the time and date information "2014/10/13" in accordance with the selected time and date basic function.

The album application searches for, on the basis of the numeric string of "2014/10/13" supplied from the time and date expression conversion application 11, a photograph file of "*****.data" including the date as metadata, and displays it on the display 56.

Also here, in the case where there are a plurality of candidates registered with the comment of "sports day", all candidates for the time and date conversion are output.

### 5-4. Example of Photograph Search

It is also possible to use time and date expression acquired by using a conversion rule registered in advance, for photograph search.

### (1) Example of Case where User Utters "search for photographs taken in summer"

In this case, the time and date expression extraction unit 83 refers to the time and date expression dictionary 101, and extracts time and date expression of "summer". The arithmetic unit 125 of the conversion processing unit 85 converts the time and date expression of "summer" into "2014/07/01 to 2014/09/30" in accordance with the conversion rule registered in the conversion rule dictionary 112.

The album application that has acquired time and date information of "2014/07/01 to 2014/09/30" searches for photographs taken in the period of "2014/07/01 to 2014/09/30" and causes the display 56 to display the search result.

### (2) Example of Case where User Utters "search for photographs taken at Christmas"

In this case, the time and date expression extraction unit 83 refers to the time and date expression dictionary 101, and extracts time and date expression of "Christmas". The arithmetic unit 125 of the conversion processing unit 85 converts the time and date expression of "Christmas" into "2014/12/25" in accordance with the conversion rule registered in the conversion rule dictionary 112.

The album application that has acquired time and date information of "2014/12/25" searches for photographs taken at "2014/12/25" and causes the display 56 to display the search result.

As described above, the conversion rules registered in the conversion rule dictionary 112 in advance include a rule for converting expression representing the range of a time and date into another time and date, and a rule for converting a specific date/time such as holidays, anniversaries into another time and date. Expression representing the range of a time and date includes "spring, summer, fall, and winter", "A.M.", "P.M." ..., and the like. Further, expression representing a specific date/time includes "solar term", "Gymnastics Day"," Children's Day ","Greenery Day", ..., and the like.

### 5-5. Example of Schedule Registration

The schedule registration using the user-assumed time and date will be described. Assumption is made that today (day when the user is operating) is "2015/01/27 (Tue)". As the application 12, the scheduler is executed.

In the case where the user utters "schedule a conference at 10 o'clock on the day after tomorrow", the time and date expression extraction unit 83 refers to the time and date expression dictionary 101 and extracts the time and date of "10 o'clock on the day after tomorrow".

The arithmetic unit 125 of the conversion processing unit 85 selects, on the basis of the conversion rule dictionary 112, "function of advancing day information two days" that is the conversion rule registered in relation to the time and date expression of "day after tomorrow". The arithmetic unit 125 converts "10 o'clock on the day after tomorrow" into the time and date information of "2015/01/29 10:00:00" in accordance with the selected time and date basic function. Note that the reference time and date at this time is the present time and date.

The scheduler registers "conference" as the schedule of 10 o'clock of "2015/01/29" on the basis of the numeric string of "2015/01/29 10:00:00" supplied from the time and date expression conversion application 11. After registering the schedule, the scheduler outputs the speech of "registered" from the speaker 59. Note that the character string of "conference" representing the schedule is extracted by analyzing the meaning of the input sentence as will be described later.

At the same time, the time and date information management unit 121 causes the user-assumed time and date storage unit 132 to store "2015/01/29 10:00:00" as the user-assumed time and date.

In the case where the user then utters "schedule a meal from 8 o'clock at night", for example, the time and date expression extraction unit 83 refers to the time and date expression dictionary 101 and extracts the time and date expression of "8 o'clock at night".

The arithmetic unit 125 of the conversion processing unit 85 converts, on the basis of the conversion rule registered in the conversion rule dictionary 112, time and date expression of "8 o'clock at night" into "2015/01/29 20:00:00" representing 8 o'clock at night of the same day. Note that the reference time and date is "2015/01/29 10:00:00" as the user-assumed time and date.

The scheduler registers "meal" as the schedule at 20 o'clock of "2015/01/29" on the basis of the numeric string of "2015/01/29 20:00:00" supplied from the time and date expression conversion application 11. After registering the schedule, the scheduler outputs speech of "registered" from the speaker 59.

At the same time, the time and date information management unit 121 causes the user-assumed time and date storage unit 132 to store "2015/01/29 20:00:00" as the user-assumed time and date.

The user-assumed time and date is held only for a predetermined time period. That is, a limit is set for the time period when the user-assumed time and date is effective. In the case where a certain time period has elapsed since the user's utterance is finished, the time and date information management unit 121 deletes the user-assumed time and date stored in the user-assumed time and date storage unit 132.

Therefore, in the case where "8 o'clock at night" is uttered after a certain time period has elapsed, conversion of the time and date expression is performed by using the present time and date as a reference time and date because processing is performed in the state where the user-assumed time and date is not held. Since the present time and date is "2015/01/27", "2015/01/27 20:00:00" is output as the conversion result of the time and date expression.

### 5-6. Example of Schedule Confirmation

As described above, it is also possible to specify the user-assumed time and date by using the detection result by a sensor such as the camera 57. Now, assumption is made that today (day when the user is operating) is "2015/01/27 (Tue)".

Further, assumption is made that the scheduler is executed as the application 12 and a calendar during the period of "2015/02/01 to 2015/02/30" is displayed on the screen of the display 56 in accordance with the user operation. In this case, "2015/02/01 to 2015/02/30" that is the time and date displayed on the screen is registered as the user-assumed time and date.

For example, in the case where the user utters "show me the following month's schedule", the time and date expression extraction unit 83 refers to the time and date expression dictionary 101 and extracts the time and date expression of "following month".

The arithmetic unit 125 of the conversion processing unit 85 converts, on the basis of the conversion rule registered in the conversion rule dictionary 112, the time and date expression of "following month" into "2015/03/01 to 2015/03/31". Note that the reference time and date is "2015/02/01 to 2015/02/30" as the user-assumed time and date.

The scheduler displays the schedule within the period on the basis of the numeric string of "2015/03/01 to 2015/03/31" supplied from the time and date expression conversion application 11.

At the same time, the time and date information management unit 121 causes the user-assumed time and date storage unit 132 to store "2015/03/01 to 2015/03/31" as the user-assumed time and date.

In the case where the user then utters "show me the schedule of 28th", the time and date expression extraction unit 83 refers to the time and date expression dictionary 101 and extracts the time and date expression of "28th".

The arithmetic unit 125 of the conversion processing unit 85 convers, on the basis of the conversion rule registered in the conversion rule dictionary 112, the time and date expression of "28th" into "2015/03/28". Note that the reference time and date is "2015/03/01 to 2015/03/31" as the user-assumed time and date.

As a result, the time and date of the calendar displayed on the screen has priority over the present time and date, and not "2015/01/28" that is 28th of January including the present time and date "2015/01/27" but the conversion result "2015/03/28" is obtained. However, in the case where conditions for time and date expression such as "28th of this month" are added and more detailed time and date expression is included in the utterance, it is converted into "2015/01/28".

The scheduler displays the schedule of "2015/03/28" on the basis of the numeric string of "2015/03/28" supplied from the time and date expression conversion application 11.

At the same time, the time and date information management unit 121 causes the user-assumed time and date storage unit 132 to store "2015/03/28" as the user-assumed time and date.

Next, assumption is made that the user utters "show me this day's schedule". Further, assumption is made that when the utterance is performed, the position of the viewpoint of the user detected by the sensor information processing unit 82 is at the position of "2015/02/01" on the calendar displayed on the display 56.

In this case, the time and date information management unit 121 detects that the user is paying attention to "2015/02/01", and causes the user-assumed time and date storage unit 132 to store, as the user-assumed time and date, "2015/02/01" that is the detected time and date. "This day" in the user's intention is considered to be "2015/02/01".

The time and date expression extraction unit 83 refers to the time and date expression dictionary 101, and extracts the time and date expression of "this day".

The arithmetic unit 125 of the conversion processing unit 85 converts, on the basis of the conversion rule registered in the conversion rule dictionary 112, the time and date expression of "this day" into the user-assumed time and date of "2015/02/01".

The scheduler displays the schedule of "2015/02/01" on the basis of the numeric string of "2015/02/01" supplied from the time and date expression conversion application 11.

As described above, it is possible to use, as the user-assumed time and date, the time and date acquired by analyzing data detected by a sensor provided in the information processing terminal 1, such as the time and date at the position of the viewpoint of the user and the time and date at the position operated by the user. The position operated by the user is detected by the touch panel 60 that is a sensor.

### 5-7. Example when Browsing News

It is also possible to convert the time and date included in a news article and display the news article in which the time and date is replaced with the converted time and date. During activation of a news application, a news article on which sentences and photographs are arranged is displayed on the display 56.

The text of the news article may include time and date expression such as "... on last Monday" and "... afternoon on 27th". The time and date expression is based on the present time and date "today" (issue date of the article). Therefore, in the case where the browsing day of the news article is different from the issue date of the article, a time gap on the day represented by the time and date expression occurs.

In this regard, in the case where information on the news article is input to the time and date expression conversion unit 71, the time and date information management unit 121 causes the present time and date storage unit 131 to store the issue date of the news article as a virtual present time and date to manage it.

For example, assumption is made that the time and date when the user is browsing the news article (present time and date) is "2015/02/01" and the issue date of the news article is "2015/01/27". In this case, the arithmetic unit 125 converts the time and date expression of "last Monday" included in the text of "... last Monday" into "2015/01/19" in accordance with the conversion rule. Note that the reference time and date is "2015/01/27" as a virtual present time and date.

Further, the arithmetic unit 125 converts the time and date expression of "afternoon on 27th" included in the text of "... afternoon on 27th" into "2015/01/27 12:00-23:59". Also here, the reference time and date is "2015/01/27" as a virtual present time and date.

The news application replaces, on the basis of the numeric string of 2015/01/19" supplied from the time and date expression conversion application 11, the character string of "last Monday" included in the news article with "2015/01/19" for display. Further, the news application replaces, on the basis of the numeric string of "2015/01/27 12:00-23:59" supplied from the time and date expression conversion application 11, the character string of "afternoon on 27th" included in the news article with "2015/01/27 12:00-23:59" for display.

As a result, even in the case where the browsing date of the news article is different from the issue date of the article, the information processing terminal 1 is capable of displaying the news article using time and date expression easy to understand for the user.

### 5-8. Example of Cooperation with Video Management Application

As described above, in the information processing terminal 1, the content of utterance of the user is classified, and whether conversion of the time and date expression is processed in the past direction or in the future direction is determined. The case of reproducing the recorded video and making video recording reservation in accordance with the determination result will be described. Assumption is made that today (day when the user is operating) is "2015/01/27 (Tue)".

In the case where the user utters "show me video recorded on Monday", the utterance content classification unit 81 analyzes the meaning of the content of utterance and classifies the utterance of the user into the category of domain:VIDEO - goal:PLAY.

The processing direction determination unit 124 of the conversion processing unit 85 refers to the processing direction list 113, and determines, on the basis of the classification result by the utterance content classification unit 81, that processing is performed in the past direction.

Meanwhile, the time and date expression extraction unit 83 refers to the time and date expression dictionary 101, and extracts the time and date expression of "Monday".

The arithmetic unit 125 of the conversion processing unit 85 selects, on the basis of the conversion rule dictionary 112, the conversion rule of "function of obtaining a date" registered in relation to the time and date expression of "Monday". The arithmetic unit 125 converts, in accordance with the selected time and date basic function, "Monday" into "2015/01/26" that is the past of the reference time and date (present time and date) of "2015/01/27" and is the date of the most recent Monday.

The video management application starts reproducing video content recorded on "2015/01/26" or displays a list of video content recorded on "2015/01/26", on the basis of the numeric string of "2015/01/26" supplied from the time and date expression conversion application 11.

Further, in the case where the user utters "record Monday's oo", the utterance content classification unit 81 analyzes the meaning of content of the utterance, and classifies the utterance of the user into the category of domain:VIDEO - goal:RECORD.

The processing direction determination unit 124 of the conversion processing unit 85 refers to the processing direction list 113, and determines, in accordance with the classification result by the utterance content classification unit 81, that processing is performed in the future direction.

Meanwhile, the time and date expression extraction unit 83 refers to the time and date expression dictionary 101, and extracts the time and date expression of "Monday".

The arithmetic unit 125 of the conversion processing unit 85 selects, on the basis of the conversion rule dictionary 112, the conversion rule of "function of obtaining a date" registered in relation to the time and date expression of "Monday". The arithmetic unit 125 converts, in accordance with the selected time and date basic function, "Monday" into "2015/02/02" that is the future of the reference time and date (present time and date) of "2015/01/27" and is the date of the most recent Monday.

The video management application sets, on the basis of the numeric string of "2015/02/02" supplied from the time and date expression conversion application 11, recording reservation of "○○" broadcasted on "2015/02/02".

### 5-9. Example of Cooperation with Healthcare Application

The information processing terminal 1 is capable of widen the interpretation of the time and date expression by registering the time and date expression and the conversion rule on the basis of data acquired from a plurality of applications.

Now, a case of using information on the schedule managed by the scheduler and an action log managed by a healthcare application will be described. Assumption is made that the user registers "jogging" as a schedule of "2015/01/02" and "2015/01/09".

In this case, the registration unit 88 registers "jogging" in the user dictionary 102 as time and date expression on the basis of information acquired from the scheduler. Further, the registration unit 88 registers the time and date expression of "jogging" in the conversion rule dictionary 112 in relation to "function of converting jogging into 2015/01/02" and "function of converting jogging into 2015/01/09".

In the case where the user utters "show me the record of the day I jogged recently" when the healthcare application is activated, the time and date expression extraction unit 83 refers to the user dictionary 102 and extracts the time and date expression of "jogging".

The arithmetic unit 125 of the conversion processing unit 85 converts "jogging" into "2015/01/02" and "2015/01/09" on the basis of the conversion rule registered in the conversion rule dictionary 112.

The healthcare application reads, on the basis of the numeric strings of "2015/01/02" and "2015/01/09" supplied from the time and date expression conversion application 11, the jogging record of "2015/01/02" and the jogging record of "2015/01/09", and displays the records on the display 56. The jogging record is an action log managed by the healthcare application.

The application 12 is capable of arbitrarily setting the holding period of the time and date expression registered in the user dictionary 102 and the holding period of the conversion rule registered in the conversion rule dictionary 112. By deleting the time and date expression and the conversion rule whose holding period has elapsed, it is possible to omit searching for unnecessary data.

### <<Second Embodiment>>

### <1. Regarding Meaning Analysis>

Next, analysis of the meaning of utterance of the user will be described. Extraction of time and date expression and the like is performed by analyzing the meaning of the utterance.

In the present disclosure, semantic analysis of the input sentence as a speech recognition result is shared and performed by the following three parts.
(1) Specifying a frame (command) from various kinds of utterance is left to a frame selection unit. To the specification of a frame, a technology for classifying utterance content can be applied.

Once the frame is determined, a slot whose value should be filled is determined. An example of the slot for each frame is as follows.

The slots required under the frame of "add schedule" are a title, a start date, an end date, a start time, an end time, and a time period.

The slots required under the frame of "check weather forecast" are a place, a start date, an end date, a start time, an end time, and a time period.

The slots required under the frame of "call" are a telephone number, a destination name, a number type (fixed telephone/mobile phone), and a group.

The slots required under the frame of "reproduce music" are a song name, album name, and an artist name.
(2) The role of the phrase extraction unit is to cut out the phrase corresponding to the slot from the speech recognition result, and place it in the corresponding slot.

For example, assumption is made that the speech recognition result of "schedule a meeting with a customer for 2 hours from 10 o'clock next Wednesday" is classified into the "add schedule" frame. In this case, the following phrases are placed in the slots of the title, the start date, the end date, the start time, the end time, and the time period.

Title <- Meeting with customer"
Start date <- "Next Wednesday"
End date <- (None)
Start time <- "10 o'clock"
End time <- (None)
Period <- "2 hours"

(3) In the value conversion, a result of phrase extraction is converted into a format easy to use by an application.

For example, in the case where the "add schedule" frame is selected, the format of the slot value relating to a time and date is converted.

The above-mentioned phrase extraction result of "schedule a meeting with a customer for 2 hours from 10 o'clock next Wednesday" is converted as following assuming that today is September 12, 2014.
Start time and date: 2014/9/17 10:00
End time and date: 2014/9/17 12:00

Further, in the case where "call" frame is selected, a telephone number is specified from the slot values of the destination name, the number type, the group, and the like.

### <2. Problems of Phrase Extraction>

Meanwhile, since it is necessary to support various speech recognition results (input sentences), there are the following problems in the phrase extraction.

### (1) Variation of Speech

For example, the phrase extraction result of "start date: today", "start time: 10 o'clock", and "title: conference" is acquired from the following input sentences. Note that in the notation of ○○:ΔΔ, "○○" that precedes ":" represents the slot and "ΔΔ" represents the phrase (slot value).

- "Register conference schedule from 10 o'clock today"
- "There is a conference at 10 o'clock today"
- "Today's conference is scheduled from 10 o'clock today" • "Conference is from 10 o'clock today"
- "Conference at 10 o'clock today"

### (2) Variation of Slot Value

For example, expression corresponding to "September 15 (Mon), 2014" has the following variations assuming that today is September 12 (Fri), 2014.

- "September 15, 2014"
- "September 15"
- "15th"
- "15th of this month"
- "Tree days from today"
- "Tree days later"
- "Tree days after today"
- "Two days after tomorrow"
- "Next week's Monday"
- "Next Monday"
- "Following Monday"
- "Respect for the Aged Day"
- "Next Respect for the Aged Day"
- "Third Monday of this month"

That is, in the input sentence of "schedule shopping on 'the phrase representing September 15, 2014"', the above-mentioned various phrases may be placed in the part of "the phrase representing September 15, 2014". In the phrase extraction, it is necessary to correctly cut out the phrase of the part, and store it in the slot of "start date" in this example.

### (3) Slot Type and Value Type

Depending on the slot, the type and tendency of values that can be placed differ.

For example, the number of slots of a person's name, a place name, a station name, a song name, and the like is very large. Further, although slots relating to a time and date (start date, end date, start time, end time, period, and the like) have some regularity, the variation thereof is enormous because combinations of month, date, day, ○ days later, and the like are possible. Although any value can be basically placed in the slot of a title in the "add schedule" frame, there is also a fixed title frequently used, such as "conference", "meeting", and "shopping".

Further, even the same phrase may need to be stored in a different slot depending on the context.

For example, the phrase of "tomorrow" is placed in the slot of "start date" in the input sentence of "schedule business trip from tomorrow to the day after tomorrow". Meanwhile, it is placed in the slot of the end date in the input sentences of "schedule business trip from today to tomorrow" and "business trip is from today to tomorrow".

Therefore, simple processing such as placing the phrase of "tomorrow" in the slot of the start date is highly likely to fail.

### <3. Method of Solving Problem of Phrase Extraction>

(1) In order to support the variation of utterance, ambiguous matching is performed between a plurality of templates prepared in advance and the input sentence.

Matching based on an edition distance is used as a method for ambiguous matching. The edition distance represents the minimum number of times until one template and the input sentence match after performing an edition operation such as insertion or deletion of a symbol between the one template and the input sentence.

The insertion or deletion of a symbol is performed only on a symbol corresponding to the outside of the slot, and not on a symbol corresponding to the inside of the slot.

It is possible to cause the template and the input sentence to match even in the case where there is a slight difference between the template and the input sentence such as "add schedule of ..." and "want to register schedule of ...".

The template referred to here represents data having a structure in which the phrase corresponding to the slot is replaced with a blank with a name in an example of input utterance. For example, the following templates are prepared in the "add schedule" frame.

- "Schedule of [title] from [start time] to [end time]"
- "Schedule of [title] from [start time] of [start date] to [end time]"
- "Add [title] to [start time]"
- "[Title] of [start date] is from [start time]"
- "[Title] of [start date] is from [start time] to [end time]"

In the above-mentioned template, that part such as [start time] surrounded by "[]" is a blank corresponding to the slot. In the following, the template corresponding to one utterance (one sentence) such as "schedule of [title] from [start time] to [end time]" is referred to as "sentence template", and a sentence template corresponding to one frame is referred to as "template set".
(2) Slot values are prepared in different methods as follows depending on the slot type.
•Slots of person name, place name, station name, song name, and the like

It is prepared by acquiring a list of a person name, a place name, a station name, and the like.
- Slot relating to time and date

It is prepared by describing basic parts such as month, date, day, hour, and minute, and a combination of the parts in a predetermined format.
- Title slot of "add schedule" frame

It is prepared by using a list including a typical title such as "conference" and "meeting" together with a mechanism that cuts out an arbitrary character string surrounded by a specific symbol. For example, in the phrase extraction on the input sentence of "schedule a meeting for the matter in question from 3 o'clock", a character string of "a meeting for the matter in question" surrounded by "schedule" and "from" is cut out and stored in the title slot.
(3) The template and the input sentence are expressed in the form of weighted finite state transducer (WFST). The reason and advantage thereof are as follows.

- Although the slot value is classified into three types as described in (2) above, any of them can be expressed as a difference in the form of WFST.
- The ambiguous matching between the input sentence and the template (after expansion) can be realized by the operation of combining WFSTs with each other, and at the same time, the phrase corresponding to the slot can be specified.

Note that marks of the beginning and end of the slot are output at the time of matching in order to specify the phrase corresponding to the slot. The part surrounded by the marks is cut out after matching, and stored in the corresponding slot.

### <4. Configuration of Speech Semantic Analyzer>

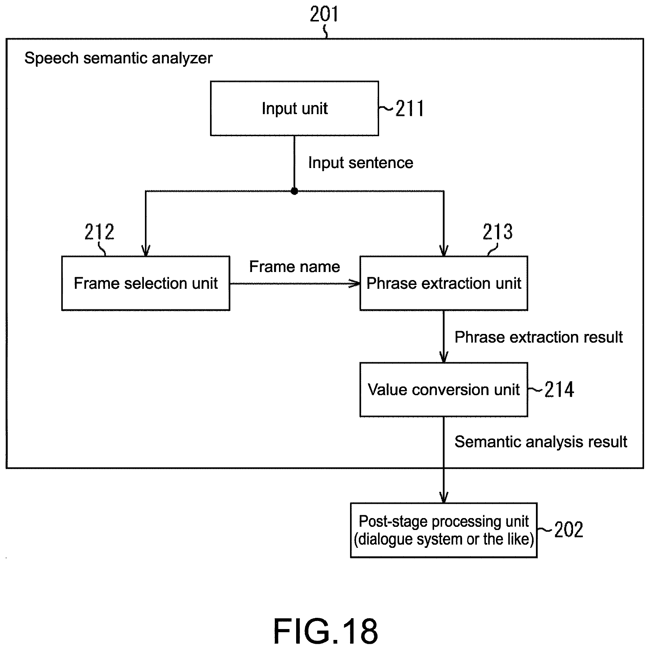

Fig. 18 is a diagram showing a configuration example of a speech semantic analyzer using the above-mentioned technology.

A speech semantic analyzer 201 includes an input unit 211, a frame selection unit 212, a phrase extraction unit 213, and a value conversion unit 214.

The input unit 211 performs processing of converting speech utterance into a text. Various speech recognition technologies can be used for this module. Further, instead of acquiring a text by speech recognition, and a text input by using a physical or virtual keyboard may be acquired. Further, a text may be acquired by using a character recognition technology.

The output of the input unit 211 is a speech recognition result corresponding to speech utterance or a text similar thereto. The output of the input unit 211 is supplied to the frame selection unit 212 and the phrase extraction unit 213 as an input sentence.

The frame selection unit 212 performs processing of selecting a frame corresponding to the input sentence. In other words, the frame selection unit 212 classifies to which frame the input sentence belongs. Various text classification technologies can be used for this module. Each frame has a name. The name (frame name) of the frame selected by the frame selection unit 212 is supplied to the phrase extraction unit 213.

The phrase extraction unit 213 extracts the phrase corresponding to the slot from the input sentence, and stores it in the corresponding slot. The phrase extraction unit 213 performs these kinds of processing by appropriately using the frame name supplied from the frame selection unit 212. The reason for using the frame name is that in which slot the phrase should be stored differs depending on the frame even in the case where it is the same phrase. Details of the phrase extraction unit 213 will be described later.

The phrase extraction result that is the output of the phrase extraction unit 213 is supplied to the value conversion unit 214. For example, in the case of the above-mentioned input sentence of "schedule a meeting with a customer for 2 hours from 10 o'clock next Wednesday", the following phrase extraction results are supplied to the value conversion unit 214.

### [Frame name: add schedule]

Start date: next Wednesday
End date: (none)
Start time: 10 o'clock
End time: (none)
Period: 2 hours
Title: meeting with a customer

The value conversion unit 214 converts the value stored in a predetermined slot of the phrase extraction result supplied from the phrase extraction unit 213 into a format easy to be processed by a post-stage processing unit 202. For example, assuming that the date of utterance is September 12, 2014, the value conversion unit 214 converts the above-mentioned phrase extraction result into the following two values of start time and date and end time and date on the basis of the value of the slot relating to a time and date. Note that the title is not converted because the title is used as it is in the post-stage processing unit 202.

### [Frame name: add schedule]

Start time and date: 2014/9/17 10:00
End time and date: 2014/9/17 12:00
Title: meeting with a customer

As another example of value conversion, the value stored in the slot representing a place name may be converted into latitude and longitude, and the value of "Mr. Yamada's workplace number" may be converted into a specific telephone number.

The output of the value conversion unit 214 is supplies to the post-stage processing unit 202 as the output of the speech semantic analyzer 201 (semantic analysis result).

The post-stage processing unit 202 performs processing corresponding to the semantic analysis result. For example, the scheduler that has obtained the above-mentioned semantic analysis result generates an item having the name of "meeting with a customer", registers the item as a schedule from 10 A.M., September 17, 2014 to 12 A.M., and manages it.

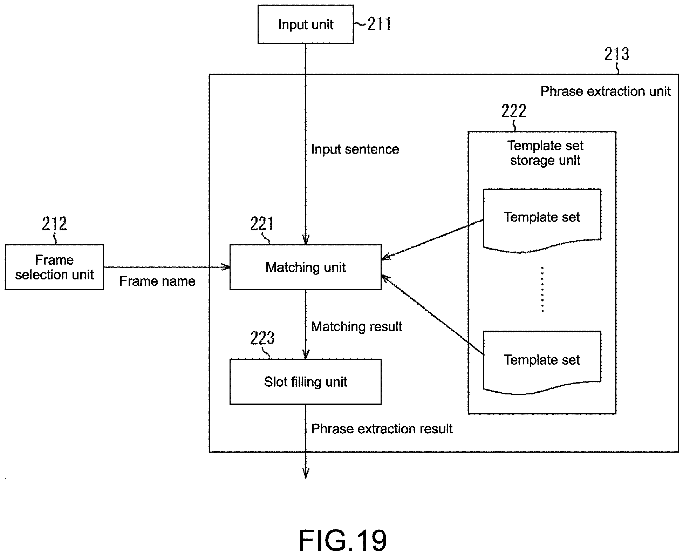

Fig. 19 is a block diagram showing a configuration example of the phrase extraction unit 213.

The phrase extraction unit 213 includes a matching unit 221, a template set storage unit 222, and a slot filling unit 223. The input sentence output from the input unit 211 and the frame name output from the frame selection unit 212 are input to the matching unit 221.

The template set storage unit 222 stores a template set. The template set stored in the template set storage unit 222 is a set of one or more sentence templates. The sentence templates are classified for each frame. In the case where N types of frames are used, N template sets are prepared accordingly.

Note that the sentence template and the template set are expressed in the form of weighted finite state transducer (WFST). Details of WFST will be described later.

The matching unit 221 reads the template set corresponding to the frame name from the template set storage unit 222, and performs the following two kinds of processing between the read template set and the input sentence.

### (Processing 1)

Processing 1 is processing of selecting a sentence template that most matches the input sentence among the sentence templates included in one template set.

### (Processing 2)

Processing 2 is processing of performing matching between the sentence template selected by the processing 1 and the input sentence, and obtaining the phrase to be stored in each slot from the input sentence.

For example, assumption is made that the input sentence is "from 3 o'clock to 5 o'clock, add a schedule of a meeting" and the template set includes the following five sentence templates.

(a) Schedule of [title] from [start time] to [end time]
(b) Schedule of [title] from [start time] of [start date] to [end time]
(c) Add [title] to [start time]
(d) [Title] of [start date] is from [start time]"
(e) [Title] of [start date] is from [start time] to [end time]"

Assuming that the sentence template of (a) is selected in the processing 1, the following matching is performed in the processing 2.
Input sentence: Add schedule of meeting from 3 o'clock to 5 o'clock
Sentence template: Schedule of [title] from [start time] to [end time]

That is, in the slots of [start time], [end time], and [title], "3 o'clock", "5 o'clock", and "meeting" are stored, respectively.

As will be described later, by combining WFST with each other, matching of the processing 1 and matching of the processing 2 are performed at the same time. The matching unit 221 outputs the matching result obtained by the matching of the processing 1 and the matching of the processing 2 to the slot filling unit 223.

The slot filling unit 223 generates data in the slot filling format from the matching result. In the case of the above-mentioned example, the slot filling unit 223 generates the following data.
Start time: 3 o'clock
End time: 5 o'clock
Title: meeting

The slot filling unit 223 outputs the generated data in the slot filling format as a phrase extraction result.

### <5. Regarding Template Set>

Next, the template set stored in the template set storage unit 222 will be described.

The template set is expressed by a weighted finite state transducer (WFST). WFST is a kind of directed graph, and includes a node called a state and an arrow called an arc. To each arc, as a label, a set of an input symbol, an output symbol, and a transition weight is added.

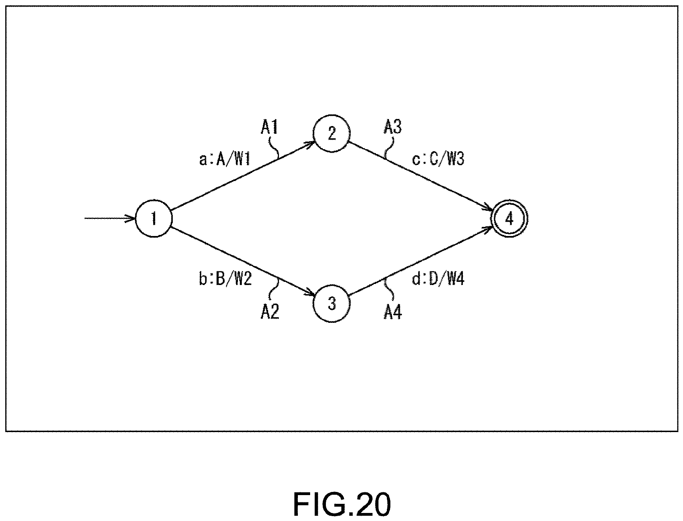

Fig. 20 is a diagram showing a basic configuration of WFST.

The basic principle of WFST will be described with reference to Fig. 20. In Fig. 20, states 1 to 4 are represented by circles. An arrow from the state 1 to the state 2, an arrow from the state 1 to the state 3, an arrow from the state 2 to the state 4, and an arrow from the state 3 to the state 4 are arcs A1 to A4, respectively.

Labels are added to the arcs A1 to A4. Each label has the form of "input symbol, output symbol, and transition weight".

For example, a label "a:A/w1" added to the arc A1 represents that "in the case where a symbol a is input in the state 1, it transits to the state 2 while consuming the symbol a, and outputs a symbol A at that time. The weight required for the transition is W1".

The state 1 is a start state. The transition of the state starts from the state 1. Further, the state 4 is an end state. In the case where the state transits to the state 4 when all the input symbols are consumed, it is expressed as "a sequence including the input symbols (hereinafter, referred to as input symbol sequence) is accepted". In other cases, i.e., in the case where there is no transition corresponding to the input symbol or the state does not transit to the state 4 even after consuming all the input symbols, it is expressed as "the input symbol sequence is not accepted".

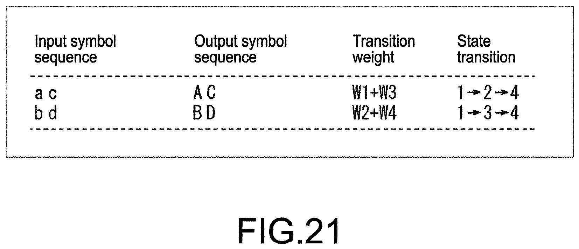

The input symbol sequences accepted by WFST in Fig. 20 are "a c" and "b d". The output symbol sequence, transition weight, and state transition corresponding to the respective input symbol sequences are as shown in Fig. 21.

Whether the transition weight is interpreted as a score (larger value indicates a better transition) or a cost (smaller value indicates better transition) is selectively used depending on the application. In the following, since the transition weight is interpreted as a cost, it is expressed also as "cost" or "penalty".

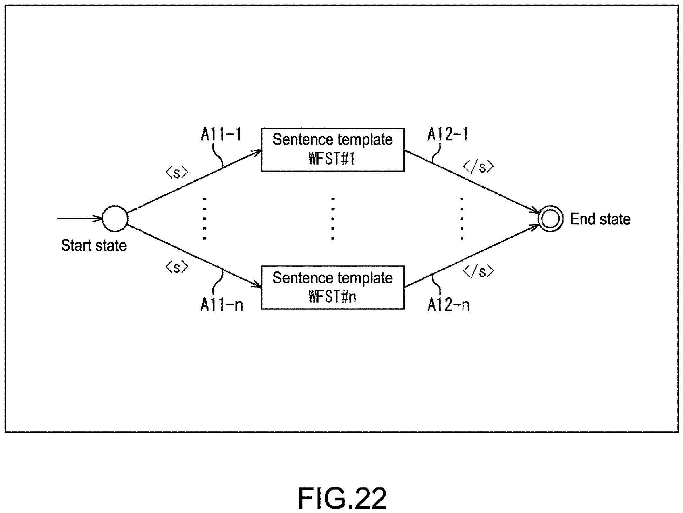

In Fig. 22 and the subsequent figures, for simplicity, regarding label notation, it is omitted in the case where the transition weight is 0, and only one of the labels is indicated in the case where the input symbol and the output symbol are the same. For example, the label "a" represents that "a:a/0" is abbreviated.

Further, in the phrase extraction processing, regarding to what of language the input symbol and the output symbol are caused to correspond, there are several cases such as the case of causing characters to correspond, the case of causing words to correspond, and the case of causing morphemes to correspond. This point will be described later.

Fig. 22 is a diagram showing the template set expressed by WFST.

As shown in Fig. 22, the template set is expressed by connecting WFSTs corresponding to the sentence templates to each other in parallel.

In the example shown in Fig. 22, a sentence template WFST#1 to a sentence template WFST#n are shown. The sentence template WFSTs are each a WFST corresponding to one sentence template. Details thereof will be described later.

Each sentence template WFST has a common start state. The sentence template WFST#1 to the sentence template WFST#n and start state are connected to each other by arcs A11-1 to 11-n. To the arcs A11-1 to 11-n, a label including "<s>" that is a special symbol representing the start of a sentence (beginning of utterance) is added. This label is marked by abbreviating "<s>:<s>/0" and represents that "<s> is consumed , <s> is output as it is, and the transition weight at this time is 0".

Further, each sentence template WFST has a common end state. The sentence template WFST#1 to the sentence template WFST#n and the end state are connected to each other by arcs A12-1 to 12-n. To the arcs A12-1 to 12-n, a label including "</s>" that is a special symbol representing the end of a sentence (end of utterance) is added. This label is marked by abbreviating "</s>:</s>/0".

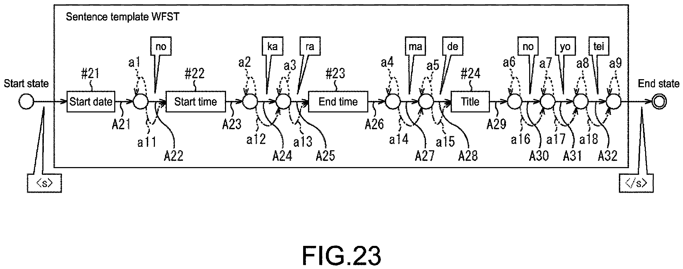

Fig. 23 is a diagram showing an example of the sentence template WFST in the case where characters are caused to correspond to the input symbol and the output symbol.

The sentence template WFST shown in Fig. 23 is a WFST corresponding to the above-mentioned sentence template (b) of "Schedule of [title] from [start time] of [start date] to [end time]".

In the example shown in Fig. 23, the input symbol and the output symbol of the WFST are characters. That is, except for the ε transition to be described later, one state transition occurs each time one character is consumed.

The start state and the end state respectively correspond to the start state and the end state shown in Fig. 22. The sentence template WFSTs surrounded by frames each correspond to any of the sentence template WFST#1 to the sentence template WFST#n.

A slot WFST#21 to a slot WFST#24 are each a WFST corresponding to [start date], [start time], [end time], and [title] of the respective slots included in the sentence template (b). Details of the slot WFST will be described later.

The labels added to arcs A22, A24, A25, A27, A28, A30, A31, andA32 are labels having normal symbols (symbols other than special symbols) as input symbols and output symbols. For example, the label "of" added to the arc A22 represents "of:of/0".

In the sentence template WFST, the arc is classified into the following 4 types. The respective arcs are appropriately referred to as arcs (a) to (d).

(a) Arc with a normal symbol as an input symbol and an output symbol
(b) Arc representing ε transition
(c) Arc to be added for ambiguous matching
(d) Arc that appears only inside a slot WFST

Now, the arcs (a) to (c) will be described. The arc (d) will be described later.

The arc (a) has features that the input symbol and the output symbol are the same and the transition weight is 0. In the example shown in Fig. 23, the arcs, A22, A24, A25, A27, A28, A30, A31, and A32 each correspond to the arc (a). For example, the arc A22 is an arc that consumes "of" and outputs "of" as it is, the transition weight at this time being 0.

The arc (b) is an arc to which no label is added. In the example shown in Fig. 23, the arcs A21, A23, A26, and A29 correspond to the arc (b). The arc (b) actually has a label of "s:s/0". ε is a special symbol representing empty, and this label represents that "it transits without consuming an input symbol and outputs no symbol at this time, and the transition weight is 0".

The arc (c) will be described. The ambiguous matching represents causing an input symbol sequence and a sentence template to match by inserting or deleting a symbol in/from the input symbol sequence or the sentence template. For example, in the case where the input sentence is "there is a conference from 3 o'clock to 5 o'clock today", the respective symbols are associated as follows in order to cause the input sentence to match the sentence template shown in Fig. 23.

Input symbol sequence: today - 3 o'clock kara 5 o'clock made conference noyoteigaaru (there is a schedule of a conference from 3 o'clock to 5 o'clock today)
Sentence template: [start date] no [start time] kara [end time] made [title] noyotei--- (schedule of [title] from [start time] of [start date] to [end time])

That is, symbols of "today", "-", "3 o'clock", "ka", "ra", "5 o'clock", "ma", "de", "conference", "no", "yo", "tei", "ga", "a", and "ru" constituting the input symbol sequence respectively correspond to the [start date] slot, "no", the [start time] slot, "ka", "ra", the [end time] slot, "ma", "de", the [title] slot, "no", "yo", "tei", "-", "-", and "-" of the sentence template.

"-" represents that there is no corresponding symbol on the partner side. In the following, the fact that there is an unnecessary symbol on the side of the input symbol sequence is expressed as "insertion", and the fact that there is an unnecessary symbol on the side of the sentence template is expressed as "deletion". In other words, in order to cause both of them to match, it only needs to delete "no" (label of the arc A22) on the side of the sentence template and insert "ga", "a", and "ru" at the end.

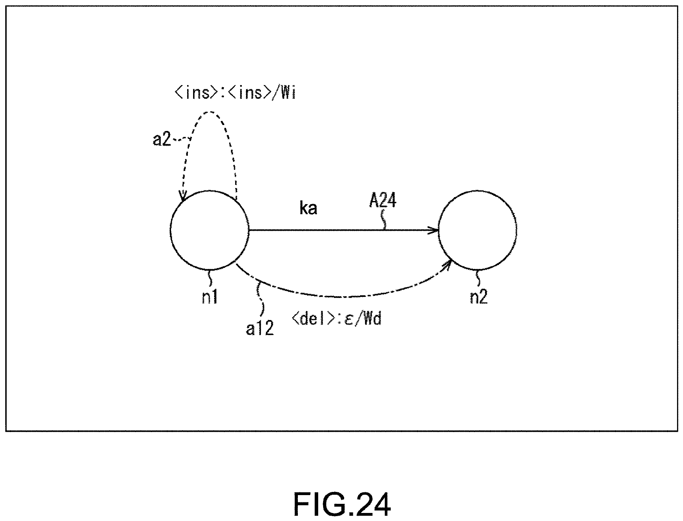

In order to realize such matching using WFST, a special arc representing insertion and deletion of a symbol is added to the side of the sentence template. In Fig. 23, arcs a1 to a9 shown by broken lines represent insertion of symbols, and arcs a11 to a18 shown by alternate long and short dash lines represents deletion of symbols. Special labels are added to the arcs. The special labels will be described with reference to Fig. 24.

Fig. 24 is a partial enlarged view of the vicinity of the arc A24 shown in Fig. 23.

Assumption is made that nodes on both sides of the arc A24 are referred to as nodes n1 and n2. The arc a2 representing insertion of a symbol appears from the node n1. The arc a2 is a self-looping arc, and returns to the node n1.

To the arc a2, a special label of "<ins>:<ins>/Wi" is added. In this label, <ins> is a special symbol representing insertion of a symbol. Further, Wi is a positive value corresponding to the weight (cost) of one time of insertion of a symbol. Wi may be 1. In this case, the sentence template WFST shown in Fig. 23 is a WFST that counts the number of times the insertion of a symbol is performed.

In the arc representing insertion of a symbol, <rest> may be used as an output symbol instead of <ins> (a label of "<ins>:<rest>/Wi" may be added). <rest> is a special symbol. In this case, it is possible to output the symbol treated as insertion in the matching result. Details thereof will be described later.

As the arc from the node n1 to the node n2, there is the arc a12 representing deletion in addition to the arc A24 that is the normal arc. To the arc a12, a special label of "<del>:ε/Wd" is added. In this label, <del> is a special label representing deletion of a symbol. Further, Wd is a positive value corresponding to the weight (cost) of one time of deletion of a symbol. Also Wd may be 1. In this case, the sentence template WFST shown in Fig. 23 is a WFST that counts the number of times deletion of a symbol is performed.

Returning to Fig. 23, a method of causing the sentence template WFST and the input sentence of "there is a conference from 3 o'clock to 5 o'clock today" to match by using these special arcs will be described.

The matching unit 221 converts the input sentence into the input symbol sequence of "<s>, kyo, u, 3, o'clock, ka, ra, 5, o'clock, ma, de, kai, gi, ga, a, ru, (there is a conference from 3 o'clock to 5 o'clock today)</s>". The matching unit 221 performs matching between this input symbol sequence and the sentence template WFST.

Since there is no symbol corresponding to "no" (symbol of the arc A22) on the side of the input symbol sequence, the state transition passes through the arc a11 that is a special arc representing deletion.

Further, since there is no label corresponding to "ga", "a", and "ru" on the side of the sentence template, the state transition passes through the arc a9 that is a special arc representing insertion three times. As a result, the difference of the three symbols "ga", "a", and "ru" is eliminated.

As a result, Wd+Wi×3 is acquired as the transition weight for the entire input symbol sequence. In the case where Wd = Wi = 1, the transition weight is represented by a value 4.

Note that in the sentence template WFST shown in Fig. 23, another transition is also possible. For example, in the case of processing "ka" in "3 o'clock kara (from 3 o'clock)", as the state transition, it is possible to pass through an arc representing insertion and then an arc representing deletion instead of passing through the arc A24. However, in this case, since the transition corresponding to the insertion and the transition corresponding to the deletion are each performed, it takes the extra cost of Wi+Wd. Therefore, by selecting the path with the smallest cost (path from the start state to the end state), a matching result with the minimum insertion and deletion can be obtained.

Now, nodes in the vicinity of the "title" slot WFST#24 will be further described. In the example shown in Fig. 23, an arc representing insertion of a symbol and an arc representing deletion of a symbol are added to the nodes on both sides of the "title" slot WFST#24. As a result, in matching with the input symbol sequence, deletion of the labels added to the arcs A27, A28, A30, A31, and A32 is permitted, and insertion of an extra symbol to the side of the input symbol sequence is permitted.

Meanwhile, for the "title" slot WFST#24, there is a case where an arbitrary symbol sequence sandwiched by specific symbols is desired to be stored as a value. In order to realize this with WFST, it is necessary to prohibit insertion and deletion of a symbol in the nodes in the vicinity of the "title" slot. This point will be described later in the description of the slot WFST.

Now, another example of the unit of a symbol will be described. In Fig. 23, although symbols are formed in units of characters, the symbols may be formed in units of words (in units of morphemes).

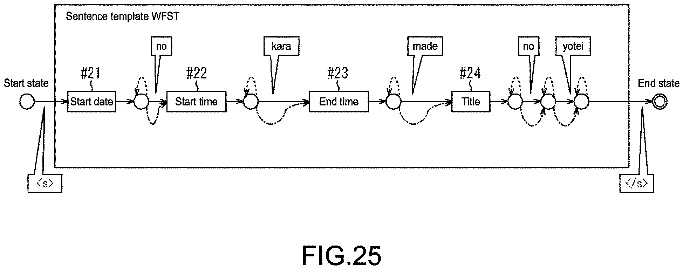

Fig. 25 is a diagram showing an example of the sentence template WFST in the case of causing words to correspond to input symbols and output symbols.

In the example shown in Fig. 23, for example, the word of "kara (from)" is divided into two symbols, and a transition occurs two times. In contrast, in Fig. 25, it is combined into one symbol, and a transition occurs only one time. Also the slot WFST#21 to the slot WFST#24 are formed by symbols in units of words.

In the case where the input sentence is processed by the WFST shown in Fig. 25, the matching unit 221 applies morphological analysis to the input sentence, and generates an input symbol sequence on the basis of the result.

Further, in the case of using morphological analysis, each symbol may include a part of speech, a detailed part of speech, and the like. For example, character strings such as "no (of) + particle + case particle", "kara (from) + particle + case particle", "made (to) + particle + case particle", and "schedule + noun + general noun" may be respectively used as symbols instead of "no", "kara", "made", and "schedule".

Note that regarding the word including a number such as time and date expression, dividing the number by characters reduces the number of types of symbols in some cases. For example, 31 types of symbols are necessary in the case where "1 (day)" to "31 (day)" is used as the unit for the part of a day of a date. However, by dividing the number by characters, it can be expressed with 11 types of symbols of numbers from 0 to 9 and "day". Therefore, even in the case where the symbol is formed in units of morphemes, the number may be formed in the units of characters.

Further, as an intermediate between the units of words and the units of characters, the symbols themselves may be formed in units of characters, and the arcs for the ambiguous matching may be arranged with consideration of word boundaries.

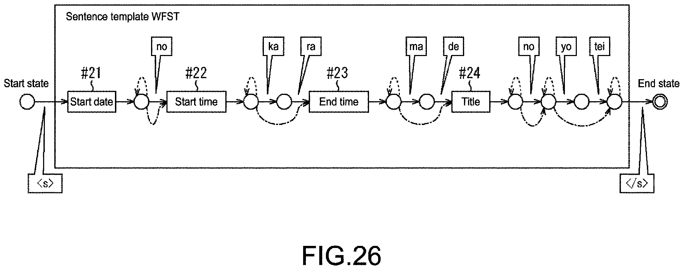

An example is shown in Fig. 26. There are two differences when comparing the part corresponding to "noyotei" in Fig. 26 with the corresponding part in Fig. 23, which is the sentence template WFST formed by symbols in units of characters. The first difference is that the arc representing insertion of a symbol is omitted in the node between "yo" and "tei". The second difference is that the arc representing deletion of a symbol is connected to the right node of the node between "yo" and "tei" by skipping the node between "yo" and "tei".

By using the sentence template WFST in such as form, the input sentence matches the sentence template WFST only in the case where the input sentence is a sequence of characters of "... no ... yotei...". As compared with the case where the symbol is formed in units of words, it is possible to reduce the number of types of symbols.

Further, in languages such as English in which a space is left between words, the symbols only need to be basically formed in units of words. Basically, it only needs to set the unit divided by blanks as a symbol. However, in some cases, it is more convenient for processing to use a more finely divided unit as a symbol. For example, the word of "today's conference" is divided into three words of "today", "'s", and "conference" by separating "'s" (apostrophe and lowercase s) at the end of the word from the previous part of "'s", which makes it easier to store "today" in the "start date" slot and "conference" in the "title" slot, for example.

Further, in languages such as English in which there are uppercase and lowercase letters, matching may fall because there is a discrepancy of uppercase and lowercase letters between the sentence template WFST and the input sentence. In order to prevent the discrepancy, there is a method of forming all the symbols on the WFST side with only lowercase letters (or only uppercase letters) and converting all the characters of the input sentence into lowercase letters (or uppercase letters) before matching.

Next, the slot WFST will be described.

As described above, the slot is classified into the following three types.

- Slots of a person's name, a place name, a station name, a song name, and the like
- Slot relating to a time and date
- Title slot of "add schedule" frame

Values of the slots of a person's name, a place name, a station name, a song name, and the like are prepared as a list. A value of the slot relating to a time and date is prepared as basic parts such as month, date, day, hour, and minute, and a combination of the parts. A value of the title slot of "add schedule" frame is prepared by using a list including a typical title together with a mechanism that cuts out an arbitrary character string surrounded by a specific symbol.

There are WFSTs (slot WFSTs) corresponding to the respective slots. From the viewpoint of the structure of WFST, the slot WFST includes a finite value slot WFST, an arbitrary value slot WFST, and a mixing slot WFST. The finite value slot WFST is a slot WFST whose value is finite. The arbitrary value slot WFST is a slot WFST having a structure for cutting out an arbitrary character string surrounded (sandwiched) by a specific symbol. The mixing slot WFST is a slot WFST having a structure obtained by combining the finite value slot WFST and the arbitrary value slot WFST.

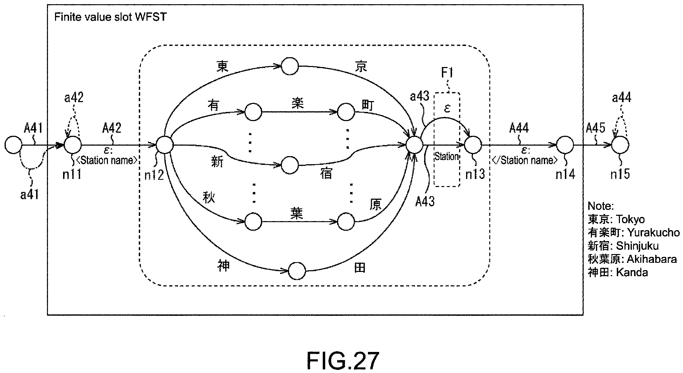

Fig. 27 is a diagram showing an example of a slot WFST taking a station name as a value.

The slot WFST shown in Fig. 27 is one finite value slot WFST, and used for storing a station name on the Yamanote line in a slot.

The configuration within the horizontally long rectangular frame is the slot WFST. To an arc A41 extending into the frame, the symbol immediately before this slot is added as a label. There is also an arc a41 representing deletion of a symbol, in parallel with the arc A41. Meanwhile, to the arc A45 extending outside the frame, a label of ε is added.

As described above, since insertion and deletion of the symbol inside the slot are not permitted, these arcs do not exist in the slot WFST basically. Exceptionally, there is an arc a42 representing insertion of a symbol only on a node n11 at the head of the slot WFST. Thus, even in the case where the input sentence includes a phrase other than station names, such as "well, Akihabara", it is possible to eliminate the phrase "well" by the self-looping by the arc a42.

An arc A42 and an arc A44 are special arcs for outputting marks representing the beginning and end of the slot, respectively. To the arc A42, a label "ε:<station name>" is added. To the arc A44, a label "ε:</station name" is added.

Since the input symbol is ε (empty), both labels respectively output "<station name>" and </station name> without consuming the input symbol when transitioning with these arcs. Therefore, after matching between the input sentence and the sentence template, a marker is embedded before and after the phrase ("Akihabara" in this example) to be placed in a slot like "well, <station name> Akihabara </station name>".

The marks representing the beginning and end of the slot may be any ones as long as they are different identifiers at the beginning and at the end for each slot. For example, in the case where the matching result is in the ML format, the beginning may be set to <slot name> and the end may be set to </slot name>.

There are FSTs representing station names on the Yamanote line between a node n12 and a node n13. These FSTs are generated by preparing a list of station names, generating one FST from one station name, and then, connecting them in parallel with each other.

Note that two arcs A43 and a43 inside a frame F1 represent that "station" at the end of a station name can be omitted. For example, even in the case where the station name in the input sentence is "Akihabara" instead of "Akihabara station", this station name slot WFST matches it. In the case where the input sentence is "Akihabara station", it matches the transition of the arc a43. In this case, the matching result of "<station name> Akihabara </station name> station" is generated.

However, in the matching, "station" matches (it transits with an arc a44) as insertion of a symbol in a node n15 that is the first node after leaving the slot WFST, and the cost of matching increases by the amount of unnecessary insertion. In the case of performing matching on the basis of the minimum cost standard, "<station name> Akihabara station </station name>" is obtained for the input of "Akihabara station".

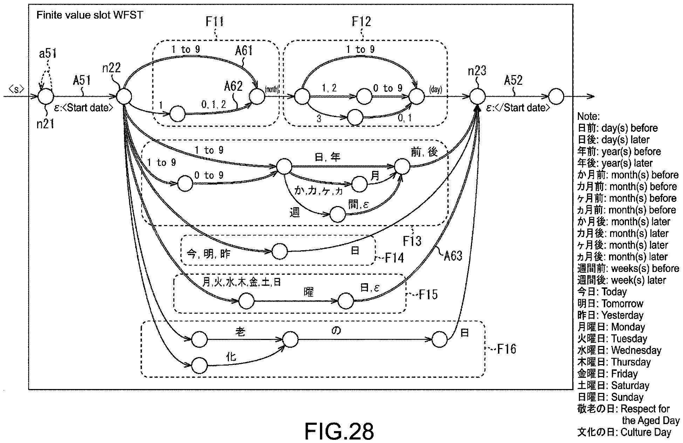

Fig. 28 is a diagram showing another example of the finite value slot WFST.

The finite value slot WFST shown in Fig. 28 is a WFST corresponding to the "start date" slot that is a slot relating to a time and date. The finite value slot WFST shown in Fig. 28 corresponds to the slot WFST#21 shown in Fig. 23.

Note that the "start date" slot whose WFST is shown in Fig. 28 stores not only the start date "today" of utterance including the start date and the end date, such as "from today to 3 days after" but also "at 3 days after" included in utterance including only one date such as "3 days after".

There is an arc a51 representing insertion of a symbol on a node n21 in the leading position. The function of the arc a51 is the same as that of the arc a42 shown in Fig. 27.

An arc A51 is a special arc for outputting a mark representing the beginning of a slot. To the arc A51, a label "ε:<start date>" is added.

An arc A52 is a special arc for outputting a mark representing the end of the slot. To the arc A52, a label "ε:<start date>" is added.

Between a node n22 and a node n23, state transitions constituting basic parts that can be values of the start date slot such as (month), (day), day of the week, and holiday, and state transitions constituting the combination thereof are described in parallel. In the following, each basic part will be described.

Note that in Fig. 28, abbreviated notation is used as the notation of the arc and label. For example, a label added to an arc A61 represented by a double line includes "to" like "1 to 9". This represents that there are nine arcs in parallel with each other in the actual FST and labels from "1" to "9" are added to the arcs.

Similarly, a label added to an arc A62 represented by a double line include commas like "0,1,2". This represents that there are arcs in parallel with each other in the actual FST and labels of "0", "1", and "2" are added to the arcs.

The FST inside a frame F11 is an FST representing the month, and matches the months from "January" to "December". The FST inside a frame F12 is an FST representing the day, and matches "1 (day)" to "31 (day). By connecting both of them, it matches the date from "January 1" to "December 31".

The FST inside a frame F13 is an FST that matches "○ day(s) before/after", "○ week(s) before/after", "○ month(s) before/after", "○ year(s) before/after", and the like. One to 99 can match the number part.

The FST inside a frame F14 is an FST that matches "today", "tomorrow", and "yesterday". It is also possible to further add an FST that matches "day after tomorrow", "day before yesterday", and the like.

The FST inside a frame F15 is an FST that matches seven days of the week from "Mon(day)" to "Sun(day)". Since the "day" of the end of "Mon(day)" and the like can be omitted, an arm A63 including an arc to which "day" is added and an arc to which "ε" is added are prepared. It is also possible to further add an FST that matches another phrase representing the day of the week such as "weekend".

The FST inside a frame F16 is an FST that matches the name of holidays such as "Respect for the Aged Day" and "Culture Day". It is also possible to further add an FST that matches a phrase representing another holiday. Further, it is also possible to add an FST that matches the name of a special day such as "Christmas" and the name of various anniversaries such as "Day of Natto (fermented soybeans)".

Further, it is also possible to add an FST that matches the following phrase as a basic part between the node n22 and the node n23.

- Years such as "2014 (year)" and "Heisei 26"
- Relative weeks such as "last week", "this week", and "next week"
- Relative months such as "last month", "this month", and "next month"
- Relative Years such as "last year", "this year", and "next year"

Further, by connecting these basic parts with each other in series, a new FST may be structured, and the new FST may be added between the node n22 and the node n23. For example, it is possible to realize an FST that matches phrases such as "next Monday" and "Wednesday after 3 days" by arranging the FST inside the frame F13 and the FST inside the frame F15 in series and connecting them with an arc to which a label "of" or "ε". Further, it is possible to realize an FST that matches phrases such as "September 15, 2014" by connecting an FST that matches the year and the FSTs inside the frame F11 and the frame F12.

As described above, by performing ambiguous matching between the sentence template and the input sentence, it is possible to perform phrase extraction on various input sentences.

Further, by expressing the sentence template, various slots therein, and a set of sentence templates as a weighted finite state transduce (WFST) and performing matching using the symbol included in the input sentence, it is possible to simultaneously perform processing of finding the sentence template that most matches the input sentence and processing of finding the phrase corresponding to the slot.

### <<Modified Example>>

In the above description, although conversion of time and date expression is performed in the information processing terminal 1, it may be performed in a server connected to the information processing terminal 1 via a network such as the Internet.

In this case, the information processing terminal 1 transmits an input sentence to the server each time the information processing terminal 1 detects utterance of a user. The server has a configuration similar to that shown in Fig. 10. The server receives the input sentence transmitted from the information processing terminal 1, and transmits, to the information processing terminal 1, information on the converted time and date acquired by performing conversion of time and date expression.

The information processing terminal 1 that has received the information on the converted time and date transmitted from the server performs the above-mentioned various kinds of processing using the converted time and date.

The information processing terminal 1 may transmit, to the server, data of speech of a user instead of an input sentence, and the server may perform processing of conversion into a text by speech recognition, and subsequent processing.

Furthermore, in the present specification, a system means an assembly of multiple constituent elements (an apparatus, a module (part) and the like), regardless of whether or not all the constituent elements are all in the same housing. Therefore, multiple apparatuses that are individually in different housings and are connected to one another over a network is a system, and one apparatus in which multiple modules are contained in one housing is a system as well.

Embodiments of the present technology are not limited to the embodiments described above, and various modifications can be made without departing from the essence of the present technology.

For example, according to the present technology, a cloud computing configuration in which over a network, one function is shared among multiple apparatuses and is jointly processed by the multiple apparatuses may be employed.

Furthermore, each step that is described referring to the flowchart may be shared among multiple apparatuses and jointly performed by the multiple apparatuses, in addition to being performed by one apparatus.

Moreover, in a case where multiple processing tasks are included in one step, the multiple processing tasks included in the one step may be shared among multiple apparatuses and jointly performed by the multiple apparatuses, in addition to being performed by one apparatus.

Effects described in the present specification are only for illustration and thus are not limited to this illustration, and other effects may be present.

### <Regarding Program>

The series of processes described above can be executed by hardware or software. When the series of processes are executed by software, a program that configures the software is installed to a computer incorporated in dedicated hardware, a general-purpose personal computer, or the like.

The program to be installed is provided by being recorded in a removable medium 64 shown in Fig. 9, such as an optical disk (CD-ROM (Compact Disc-Read Only Memory), a DVD (Digital Versatile Disc), and the like) and a semiconductor memory. The program may be provided via a wired or wireless transmission medium such as a local area network, the Internet, and digital broadcast. The program can be installed in the ROM 52 or the memory 61 in advance.

It should be noted that the program executed by a computer may be a program the processes of which are executed chronologically in order of the present description in the specification or may be a program the processes of which are executed in parallel or at a necessary timing, for example, at a time of being called.

### <Combination Example of Configuration>

It should be noted that the present technology may take the following configurations.

(1) An information processing apparatus, including:
   a time and date management unit that specifies an assumed time and date, a user assuming the assumed time and date;
   an extraction unit that extracts time and date expression included in an input sentence, the input sentence being input by the user; and
   an arithmetic unit that obtains a time and date represented by the extracted time and date expression on the basis of the assumed time and date.
(2) The information processing apparatus according to (1) above, further including
   a determination unit that determines, depending on the extracted time and date expression, any of the assumed time and date and the present time and date as a time and date used as a reference for obtaining the time and date represented by the time and date expression, in which
   the arithmetic unit obtains the time and date represented by the extracted time and date expression on the basis of the time and date determined by the determination unit.
(3) The information processing apparatus according to (1) or (2) above, in which
   the time and date management unit manages the time and date obtained by the arithmetic unit as a new assumed time and date, and
   the arithmetic unit obtains, on the basis of the new assumed time and date, a time and date represented by the time and date expression extracted from the input sentence input after managing the new assumed time and date.
(4) The information processing apparatus according to any one of (1) to (3) above, further including:
   an output unit that outputs time and date information in a predetermined format, the time and date information representing the time and date obtained by the arithmetic unit; and
   a processing unit that performs processing on the basis of the time and date information output from the output unit.
(5) The information processing apparatus according to any one of (1) to (4) above, further including
   a storage unit that stores a plurality of kinds of pieces of time and date expression, in which
   the extraction unit extracts the time and date expression stored in the storage unit from the input sentence.
(6) The information processing apparatus according to (5) above, further including
   a registration unit that causes the storage unit to additionally store the time and date expression input by the user.
(7) The information processing apparatus according to any one of (1) to (6) above, further including
   a storage unit that stores a rule of how to obtain a time and date represented by the time and date expression in relation to the time and date expression, in which
   the arithmetic unit obtains the time and date represented by the time and date expression in accordance with the rule stored in the storage unit in relation to the extracted time and date expression.
(8) The information processing apparatus according to (7) above, further including
   a registration unit that causes the storage unit to additionally store the rule input by the user.
(9) The information processing apparatus according to any one of (1) to (8) above, further including:
   a classification unit that classifies content of the input sentence; and
   a determination unit that determines, depending on a result of classifying the content of the input sentence, whether calculation of the time and date represented by the extracted time and date expression is performed so as to obtain a time and date of the past or a time and date of the future, in which
   the arithmetic unit performs the calculation of the time and date represented by the extracted time and date expression in accordance with the determination by the determination unit.
(10) The information processing apparatus according to any one of (1) to (9) above, in which
   the input sentence is a character string obtained by recognizing utterance of the user, or a character string input by a user's operation.
(11) The information processing apparatus according to any one of (1) to (10), in which
   the time and date management unit specifies the assumed time and date on the basis of an analysis result of the input sentence or a user's operation.
(12) An information processing method, including:
   specifying an assumed time and date, a user assuming the assumed time and date;
   extracting time and date expression included in an input sentence, the input sentence being input by the user; and
   obtaining a time and date represented by the extracted time and date expression on the basis of the assumed time and date.
(13) A program causing a computer to perform processing including the steps of:
   specifying an assumed time and date, a user assuming the assumed time and date;
   extracting time and date expression included in an input sentence, the input sentence being input by the user; and
   obtaining a time and date represented by the extracted time and date expression on the basis of the assumed time and date. Reference Signs List

- 1: information processing terminal
- 11: time and date expression conversion application
- 71: time and date expression conversion unit
- 81: utterance content classification unit
- 82: sensor information processing unit
- 83: time and date expression extraction unit
- 84: extraction information storage unit
- 85: conversion processing unit
- 86: conversion information storage unit
- 87: result output unit
- 88: registration unit
- 101: time and date expression dictionary
- 102: user dictionary
- 111: time and date basic function dictionary
- 112: conversion rule dictionary
- 113: processing direction list
- 114: reference expression list
- 121: time and date information management unit
- 122: time and date information storage unit
- 123: reference time and date determination unit
- 124: processing direction determination unit
- 125: arithmetic unit

## Claims

1. An information processing apparatus, comprising:
a time and date management unit that specifies an assumed time and date, a user assuming the assumed time and date;
an extraction unit that extracts time and date expression included in an input sentence, the input sentence being input by the user; and
an arithmetic unit that obtains a time and date represented by the extracted time and date expression on the basis of the assumed time and date.

2. The information processing apparatus according to claim 1, further comprising
a determination unit that determines, depending on the extracted time and date expression, any of the assumed time and date and the present time and date as a time and date used as a reference for obtaining the time and date represented by the time and date expression, wherein
the arithmetic unit obtains the time and date represented by the extracted time and date expression on the basis of the time and date determined by the determination unit.

3. The information processing apparatus according to claim 1, wherein
the time and date management unit manages the time and date obtained by the arithmetic unit as a new assumed time and date, and
the arithmetic unit obtains, on the basis of the new assumed time and date, a time and date represented by the time and date expression extracted from the input sentence input after managing the new assumed time and date.

4. The information processing apparatus according to claim 1, further comprising:
an output unit that outputs time and date information in a predetermined format, the time and date information representing the time and date obtained by the arithmetic unit; and
a processing unit that performs processing on the basis of the time and date information output from the output unit.

5. The information processing apparatus according to claim 1, further comprising
a storage unit that stores a plurality of kinds of pieces of time and date expression, wherein
the extraction unit extracts the time and date expression stored in the storage unit from the input sentence.

6. The information processing apparatus according to claim 5, further comprising
a registration unit that causes the storage unit to additionally store the time and date expression input by the user.

7. The information processing apparatus according to claim 1, further comprising
a storage unit that stores a rule of how to obtain a time and date represented by the time and date expression in relation to the time and date expression, wherein
the arithmetic unit obtains the time and date represented by the time and date expression in accordance with the rule stored in the storage unit in relation to the extracted time and date expression.

8. The information processing apparatus according to claim 7, further comprising
a registration unit that causes the storage unit to additionally store the rule input by the user.

9. The information processing apparatus according to claim 1, further comprising:
a classification unit that classifies content of the input sentence; and
a determination unit that determines, depending on a result of classifying the content of the input sentence, whether calculation of the time and date represented by the extracted time and date expression is performed so as to obtain a time and date of the past or a time and date of the future, wherein
the arithmetic unit performs the calculation of the time and date represented by the extracted time and date expression in accordance with the determination by the determination unit.

10. The information processing apparatus according to claim 1, wherein
the input sentence is a character string obtained by recognizing utterance of the user, or a character string input by a user's operation.

11. The information processing apparatus according to claim 1, wherein
the time and date management unit specifies the assumed time and date on the basis of an analysis result of the input sentence or a user's operation.

12. An information processing method, comprising:
specifying an assumed time and date, a user assuming the assumed time and date;
extracting time and date expression included in an input sentence, the input sentence being input by the user; and
obtaining a time and date represented by the extracted time and date expression on the basis of the assumed time and date.

13. A program causing a computer to perform processing including the steps of:
specifying an assumed time and date, a user assuming the assumed time and date;
extracting time and date expression included in an input sentence, the input sentence being input by the user; and
obtaining a time and date represented by the extracted time and date expression on the basis of the assumed time and date.
